(19) Europäisches Patentamt
European Patent Office
Office européen des brevets

(11) EP 4 253 432 B1

(12) EUROPEAN PATENT SPECIFICATION

(45) Date of publication and mention of the grant of the patent:
**25.02.2026 Bulletin 2026/09**

(21) Application number: **21897984.7**

(22) Date of filing: **24.11.2021**

(51) International Patent Classification (IPC):
***C08F 214/26*** (2006.01) ***C08F 236/20*** (2006.01)
***C08J 3/20*** (2006.01) ***C08L 27/18*** (2006.01)

(52) Cooperative Patent Classification (CPC):
(C-Sets available)
**C08F 214/26; C08J 3/201; C08L 27/18;**
C08F 214/262; C08J 2327/12; C08J 2427/12
(Cont.)

(86) International application number:
**PCT/JP2021/043023**

(87) International publication number:
**WO 2022/114012 (02.06.2022 Gazette 2022/22)**

(54) **FLUOROPOLYMER, AQUEOUS LIQUID DISPERSION, COMPOSITION, AND CROSSLINKED PRODUCT**

FLUORPOLYMER, WÄSSRIGE FLÜSSIGKEITSDISPERSION, ZUSAMMENSETZUNG UND VERNETZTES PRODUKT

FLUOROPOLYMÈRE, DISPERSION AQUEUSE DE LIQUIDE, COMPOSITION ET PRODUIT RÉTICULÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.11.2020 JP 2020195491**

(43) Date of publication of application:
**04.10.2023 Bulletin 2023/40**

(73) Proprietor: **DAIKIN INDUSTRIES, LTD.**
**Osaka 530-0001 (JP)**

(72) Inventors:
- **NOHARA, Asuka**
  **Osaka-shi, Osaka 530-0001 (JP)**
- **HANDA, Shinya**
  **Osaka-shi, Osaka 530-0001 (JP)**
- **OTA, Daisuke**
  **Osaka-shi, Osaka 530-0001 (JP)**
- **NANBA, Yoshinori**
  **Osaka-shi, Osaka 530-0001 (JP)**
- **YAMAUCHI, Akiyoshi**
  **Osaka-shi, Osaka 530-0001 (JP)**
- **HOSHIYA, Naoyuki**
  **Osaka-shi, Osaka 530-0001 (JP)**
- **NOGUCHI, Tsuyoshi**
  **Osaka-shi, Osaka 530-0001 (JP)**

(74) Representative: **Hoffmann Eitle**
**Patent- und Rechtsanwälte PartmbB**
**Arabellastraße 30**
**81925 München (DE)**

(56) References cited:
**EP-A1- 0 302 513** **WO-A1-2014/167797**
**CN-A- 106 317 290** **CN-A- 106 317 290**
**JP-A- 2002 220 668** **JP-A- H05 230 151**

- **PETROV V. A., BELEN'KII G. G., GERMAN L. S.: "The electrophilic condensation of conjugated perfluorodienes with tetrafluoroethylene", BULLETIN OF THE ACADEMY OF SCIENCES OF THE USSR, DIVISION OF CHEMICAL SCIENCES., SPRINGER NEW YORK LLC, US, vol. 39, no. 4, 1 April 1990 (1990-04-01), US , pages 826 - 829, XP055933584, ISSN: 0568-5230, DOI: 10.1007/BF00960358**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 214/26, C08F 236/20;**
**C08L 27/18, C08K 5/18, C08L 27/18;**
C08F 214/262, C08F 216/1408, C08F 216/1458

## Description

TECHNICAL FIELD

The present disclosure relates to a fluoropolymer, an aqueous dispersion, a composition, and a crosslinked product.

BACKGROUND ART

Patent Document 1 discloses a polytetrafluoroethylene formed article obtained by subjecting a crosslinkable polytetrafluoroethylene having a reactive functional group such as a cyano group (-CN) to a crosslinking reaction.

Patent Document 2 discloses a fluorine-containing polymer which is a copolymer of a perfluorodiene monomer of the formula (1) and at least one other radically polymerizable monomer, wherein all or at least one of the other radically polymerizable monomers is a fluorine-containing monomer.

$$CF_2=CFO(CF_2CF(CF_3)O)_n(CF_2)_mCF=CF_2 \qquad \text{Formula (1)}$$

where n and m are each independently an integer of 1 of 3.

Patent Document 3 discloses an elastomer composition for a wiper blade prepared by blending 5 to 10 parts by weight of an irradiation crosslinked polytetrafluoroethylene (PTFE) powder with 100 parts by weight of a base elastomer polymer.

Patent Document 4 discloses a sealant composition prepared by blending a fluorine-containing elastomer mainly composed of repeating units each derived from a fluoroolefin and a perfluoroalkyl vinyl ether with 5 to 50% by weight of a fluororesin fine powder such as polytetrafluoroethylene powder. - Patent Document 5 discloses a modified polytetrafluoroethylene, unsintered powder comprising tetrafluoroethylene and a diene compound of formula (I): $CH_2=CH-(CF_2)n-CH=CH_2$ (I), wherein n is an integer of 0 to 20, preferably 6 to 20 in an amount of 0.01 - 1 mol.%. -

RELATED ART

PATENT DOCUMENTS

Patent Document 1: International Publication No. WO 2007/052664
Patent Document 2: Japanese Patent Laid-Open No. 5-230151
Patent Document 3: Japanese Patent Laid-Open No. 2001-151086
Patent Document 4: International Publication No. WO 97/08239
Patent Document 5: European Patent Application No. EP 0302513

SUMMARY OF THE INVENTION

PROBLEM TO BE SOLVED BY THE INVENTION

An object of the present disclosure is to provide a fluoropolymer that can be easily produced.

Another object of the present disclosure is to provide a composition with which a crosslinked product having excellent plasma resistance and a small compression set can be obtained.

MEANS FOR SOLVING THE PROBLEM

According to the present disclosure, there is provided a fluoropolymer comprising tetrafluoroethylene unit (1) and a monomer unit (2) derived from a perfluoroalkadiene represented by formula (2):

$$CF_2=CF(CF_2)_nCF=CF_2$$

where n represents an integer of 2 to 10, wherein a content of tetrafluoroethylene unit (1) is 98.0 to 99.999 mol% based on total monomer units constituting the fluoropolymer, and a content of the monomer unit (2) is 0.001 to 2.0 mol% based on total monomer units constituting the fluoropolymer.

In the fluoropolymer of the present disclosure, it is preferable that a spectral intensity ratio ($h_1/h_0$) of a peak height

($h_1$) appearing at 1030 to 1040 $cm^{-1}$ to a peak height ($h_0$) appearing at 2360 to 2370 $cm^{-1}$, obtained by infrared absorption spectral analysis of the fluoropolymer, is 0.001 or more.

In the fluoropolymer of the present disclosure, it is preferable that a spectral intensity ratio ($h_2/h_0$) of a peak height ($h_2$) appearing at 1780 to 1800 $cm^{-1}$ to a peak height ($h_0$) appearing at 2360 to 2370 $cm^{-1}$, obtained by infrared absorption spectral analysis of the fluoropolymer, is 0.20 or less.

In the fluoropolymer of the present disclosure, a peak temperature is preferably 300°C or more.

In the fluoropolymer of the present disclosure, a melt viscosity measured at 380°C is preferably $1.0 \times 10^3$ to $7.0 \times 10^6$ poise.

In the fluoropolymer of the present disclosure, the fluoropolymer is preferably a powder.

According to the present disclosure, there is also provided an aqueous dispersion comprising the fluoropolymer.

According to the present disclosure, there is also provided a composition comprising the fluoropolymer (hereinafter sometimes referred to as fluoropolymer (P)) and a polymer (E) different from the fluoropolymer (P).

In the composition of the present disclosure, the polymer (E) is preferably a perfluoroelastomer.

In the composition of the present disclosure, a content of the fluoropolymer (P) is preferably 0.5 to 100 parts by mass based on 100 parts by mass of the polymer (E).

The composition of the present disclosure preferably further comprises at least one selected from the group consisting of an inorganic nitride, an organotin compound, an ammonia-generating compound, and a cross-linking agent.

According to the present disclosure, there is also provided a crosslinked product obtained from the above composition.

## EFFECTS OF INVENTION

According to the present disclosure, it is possible to provide a fluoropolymer that can be easily produced.

According to the present disclosure, it is also possible to provide a composition with which a crosslinked product having excellent plasma resistance and a small compression set can be obtained.

## BRIEF DESCRIPTION OF DRAWINGS

Figure 1 is an infrared absorption spectrum of a fluoropolymer obtained in Synthesis Example 4. The horizontal axis represents wave number ($cm^{-1}$), and the vertical axis represents absorbance (A) (%).

Figure 2 is an infrared absorption spectrum of a fluoropolymer obtained in Comparative Synthesis Example 1.

## DESCRIPTION OF EMBODIMENTS

Hereinafter, specific embodiments of the present disclosure will be described in detail, but the present disclosure is not limited to the following embodiments.

A fluoropolymer of the present disclosure contains a tetrafluoroethylene (TFE) unit (1) and a monomer unit (2).

On the other hand, Patent Document 1 describes that a reactive functional group such as a cyano group (-CN) is introduced into polytetrafluoroethylene (PTFE) and this is crosslinked to obtain a PTFE resin which is less likely to be deformed than a conventional PTFE resin. However, when a reactive functional group such as a cyano group is introduced into PTFE, the reactive functional group is likely to be hydrolyzed, and improvement in storage stability is desired.

Further, Patent Document 2 describes that a copolymer is obtained by copolymerizing a perfluorodiene monomer having a structure of the formula (1) described above. Such a perfluorodiene monomer has a problem that the reactivity is high and it is difficult to control the copolymerization reaction.

Patent Document 3 describes that an irradiation crosslinked PTFE obtained by irradiation with an electron beam exhibits an abrasion resistance 1000 times or more as high as that of an uncrosslinked PTFE. When PTFE is irradiated with an electron beam, PTFE is decomposed simultaneously with crosslinking, and thus there is a problem in that the heat resistance of PTFE is reduced. Further, it is necessary to introduce an apparatus for irradiating an electron beam, and it is not easy to reduce the production cost.

The monomer unit (2) contained in the fluoropolymer of the present disclosure is introduced into the fluoropolymer by copolymerizing, with TFE, a perfluoroalkadiene represented by formula (2):

$$CF_2=CF(CF_2)_nCF=CF_2$$

wherein n represents an integer of 2 to 10. Since the control of the copolymerization reaction of TFE with perfluoroalkadiene is relatively easy, the fluoropolymer of the present disclosure can be easily produced. Further, since reactive

functional groups that are easily hydrolyzed are not introduced into the fluoropolymer, the fluoropolymer of the present disclosure is also excellent in storage stability. Furthermore, since they are not modified by irradiation, the fluoropolymer of the present disclosure exhibits excellent heat resistance as well as improved creep resistance compared to uncrosslinked PTFE. The fluoropolymer of the present disclosure may contain, as the monomer unit (2), two or more kinds of monomer units derived from a perfluoroalkadiene represented by formula (2).

n in formula (2) represents an integer of 2 to 10. n is preferably an integer of 3 to 9, and more preferably an integer of 4 to 8. From the viewpoint of ease of synthesis of perfluoroalkadiene, n is preferably 2, 4, 6, 8 or 10, more preferably 2, 4, 6 or 8, further preferably 4, 6 or 8, and particularly preferably 4 or 8.

The perfluoroalkadiene represented by formula (2) is preferably at least one selected from the group consisting of $CF_2=CF(CF_2)_2CF=CF_2$, $CF_2=CF(CF_2)_4CF=CF_2$, $CF_2=CF(CF_2)_6CF=CF_2$, and $CF_2=CF(CF_2)_8CF=CF_2$. Among these, $CF_2=CF(CF_2)_4CF=CF_2$ is more preferable.

Since perfluoroalkadienes do not contain a C-H bond, a structure similar to the TFE unit can be introduced into the polymer chain by polymerizing perfluoroalkadiene. The excellent heat resistance of the fluoropolymer of the present disclosure can also be explained by this reason.

The content of the TFE unit in the fluoropolymer is 98.0 to 99.999 mol% based on the total monomer units constituting the fluoropolymer. The content of the TFE unit is preferably 98.5 mol% or more, more preferably 98.8 mol% or more, and preferably 99.995 mol% or less, more preferably 99.990 mol% or less, because heat resistance can be improved while maintaining excellent storage stability and creep resistance.

The content of the monomer unit (2) in the fluoropolymer is 0.001 to 2.0 mol% based on the total monomer units constituting the fluoropolymer. The content of the monomer unit (2) is preferably 0.002 mol% or more, more preferably 0.005 mol% or more, further preferably 0.010 mol% or more, and preferably 1.5 mol% or less, more preferably 1.2 mol% or less, further preferably 1.0 mol% or less, particularly preferably 0.80 mol% or less, because storage stability and creep resistance can be improved while maintaining excellent heat resistance.

The content of the monomer units in the fluoropolymer can be calculated by appropriately combining NMR and FT-IR according to the type of monomer.

The fluoropolymer of the present disclosure may contain a monomer unit derived from a monomer other than TFE and perfluoroalkadiene.

The other monomer may be any monomer copolymerizable with TFE and perfluoroalkadiene, and examples thereof include perfluoroolefins such as hexafluoropropylene [HFP]; chlorofluoroolefins such as chlorotrifluoroethylene [CTFE]; hydrogen-containing fluoroolefins such as trifluoroethylene and vinylidene fluoride [VDF]; fluoroalkyl vinyl ethers; fluoroalkyl allyl ethers; perfluoroalkylethylenes; and ethylene.

The fluoropolymer of the present disclosure preferably exhibits a characteristic peak at 1030 to 1040 $cm^{-1}$ in an infrared absorption spectrum obtained by analyzing the infrared absorption spectral analysis of the fluoropolymer. The spectral intensity ratio ($h_1/h_0$) of the peak height ($h_1$) appearing at 1030 to 1040 $cm^{-1}$ to the peak height ($h_0$) appearing at 2360 to 2370 $cm^{-1}$, obtained by infrared absorption spectral analysis of fluoropolymers, is preferably 0.001 or more, more preferably 0.005 or more, and preferably 2.500 or less, more preferably 1.500 or less, further preferably 1.000 or less, particularly preferably 0.650 or less.

The absorption peak appearing at 1030 to 1040 $cm^{-1}$ is presumed to be a peak derived from the C-C bond of the branched portion of the polymer chain formed by copolymerization of perfluoroalkadiene, and the magnitude of the spectral intensity ratio ($h_1/h_0$) is presumed to represent the amount of the structure of the branched portion derived from perfluoroalkadiene introduced into the polymer chain. It is presumed that polymerization of perfluoroalkadiene introduces a structure similar to the TFE unit into the polymer chain, but fluoropolymers containing a monomer unit derived from perfluoroalkadiene show a characteristic peak in the vicinity of 1030 to 1040 $cm^{-1}$, whereas conventional PTFE does not exhibit such a peak. Therefore, the fluoropolymer of the present disclosure is clearly structurally different from conventional PTFE. Such a fluoropolymer containing a monomer unit derived from perfluoroalkadiene and exhibiting such a characteristic peak is excellent in storage stability, heat resistance and creep resistance.

The fluoropolymer of the present disclosure preferably does not exhibit a noticeable peak at 1780 to 1800 $cm^{-1}$ in an infrared absorption spectrum obtained by analyzing the infrared absorption spectral analysis of the fluoropolymer. The spectral intensity ratio ($h_2/h_0$) of the peak height ($h_2$) appearing at 1780 to 1800 $cm^{-1}$ to the peak height ($h_0$) appearing at 2360 to 2370 $cm^{-1}$, obtained by infrared absorption spectral analysis of fluoropolymers, is preferably 0.25 or less, more preferably 0.20 or less, and preferably 0.15 or more.

It is presumed that the magnitude of the spectral intensity ratio ($h_2/h_0$) represents the amount of double bonds in the side chain of the fluoropolymer in addition to the amount of C-F bonds contained in the fluoropolymer chain. When the fluoropolymer has double bonds in the side chains, strong absorptions are observed at 1780 to 1800 $cm^{-1}$ in the infrared absorption spectrum. The fluoropolymers having a small spectral intensity ratio ($h_2/h_0$) have no or few double bonds in the side chain, and therefore, for example, when used in combination with other polymers, the fluoropolymers do not react with other polymers and can remain extremely stable in the composition.

From the viewpoint of heat resistance, the peak temperature of the fluoropolymer is preferably 300°C or higher,

more preferably 310°C or higher, further preferably 320°C or higher, and preferably 347°C or lower, more preferably 345°C or lower.

It is also preferred that the fluoropolymer has a relatively higher peak temperature. The peak temperature of the fluoropolymer is preferably 333°C or higher, more preferably 335°C or higher, and preferably 347°C or lower, more preferably 345°C or lower. Fluoropolymers having a relatively higher peak temperature tend to exhibit fibrillability and tend to exhibit non-melt processability.

It is also preferred that the fluoropolymer has a relatively lower peak temperature. The peak temperature of the fluoropolymer is preferably 322°C or higher, more preferably 324°C or higher, and preferably 333°C or lower, more preferably 332°C or lower. Fluoropolymers having a relatively lower peak temperature tend to exhibit non-fibrillability and tend to exhibit melt processability.

The peak temperature can be measured using TG/DTA (simultaneous thermogravimetric - differential thermal analyzer) by precisely weighing about 10 mg of fluoropolymer powder, which has no history of being heated to a temperature of 300°C or higher, and storing it in a dedicated aluminum pan. The peak temperature can be specified as the temperature corresponding to the maximum value appearing in the differential thermal (DTA) curve obtained by increasing the temperature of fluoropolymer without a history of being heated to a temperature of 300°C or higher in air at 10°C/min using TG/DTA (simultaneous thermogravimetric - differential thermal analyzer).

From the viewpoint of heat resistance, the 1.0 mass% weight loss temperature of the fluoropolymer is preferably 400°C or higher, more preferably 405°C or higher, and further preferably 410°C or higher. The upper limit of the 1.0 mass% weight loss temperature may be 500°C.

The 1.0 mass% weight loss temperature can be measured using TG/DTA (simultaneous thermogravimetric - differential thermal analyzer) by precisely weighing about 10 mg of fluoropolymer powder, which has no history of being heated to a temperature of 300°C or higher, and storing it in a dedicated aluminum pan. The 1.0 mass% weight loss temperature can be specified as a temperature corresponding to the point at which the weight of the aluminum pan is reduced by 1.0% by mass by heating the aluminum pan under the condition of 10°C/min in the temperature range from 25°C to 600°C in an atmospheric atmosphere.

The specific gravity of the fluoropolymer is preferably 2.130 to 2.230, and more preferably 2.130 to 2.190.

The specific gravity can be measured by SSG or a water replacement method. SSG can be measured by the water replacement method in conformity with ASTM D 792 using a sample formed in conformity with ASTM D 4895-89.

The fluoropolymer according to one embodiment is fibrillatable. A fibrillatable fluoropolymer can be formed by paste extrusion by utilizing its fibrillability. Furthermore, the fluoropolymer can be extruded by paste extrusion, and the extrudate can be formed into a sheet by rolling, or the extrudate can be formed into a porous body by stretching.

The fluoropolymer according to one embodiment is non-fibrillatable. A non-fibrillatable fluoropolymer has excellent chemical stability and a very low surface energy, and is less likely to generate fibrils, and is therefore suitably used as an additive for improving the lubricity and the texture of the coating surface, and the like in production of plastics, inks, cosmetics, coating materials, greases, parts of office automation equipment, toners, and the like (e.g., see Japanese Patent Laid-Open No. 10-147617).

The presence or absence of fibrillability can be determined by "paste extrusion", which is a representative method of molding a "high molecular weight PTFE powder", which is a powder made of a TFE polymer. Usually, the high-molecular-weight PTFE can be paste-extruded when it is fibrillatable. When a non-sintered molded product obtained by paste extrusion shows substantially no strength or elongation (for example, when it shows an elongation of 0% and is broken when stretched), it can be regarded as non-fibrillatable.

The fluoropolymer according to one embodiment is non melt-processible. A non melt-processible fluoropolymer tends to exhibit fibrillability.

The fluoropolymer according to one embodiment is not non melt-processible. A fluoropolymer which is not non melt-processible is less likely to generate fibrils. By using a fluoropolymer which is not non melt-processible (a melt-fabricable fluoropolymer) in the composition of the present disclosure described below, the plasma resistance (in particular, durability against $NF_3$ remote plasma) of the crosslinked product obtained from the composition can be improved.

The term non melt-processible means a feature of polymer that the melt flow rate thereof cannot be measured at a temperature higher than the above-described peak temperature in conformity with ASTM D 1238 and D 2116.

The fluoropolymer according to one embodiment has a melt viscosity measured at 380°C of $1.0 \times 10^3$ to $7.0 \times 10^6$ poise, preferably $1.0 \times 10^4$ to $5.0 \times 10^6$ poise, and further preferably $1.0 \times 10^5$ to $2.0 \times 10^6$ Poise. By using a fluoropolymer having a melt viscosity within the above range in the composition of the present disclosure described below, the plasma resistance (in particular, durability against $NF_3$ remote plasma) of the crosslinked product obtained from the composition can be greatly improved.

The peak temperature, fibrillability, and non-melt processability of the fluoropolymer can be adjusted by adjusting the conditions of the polymerization of the fluoromonomer to produce the fluoropolymer. For example, by appropriately selecting the conditions for polymerization of fluoromonomers so as to increase the molecular weight of the resulting

fluoropolymer, the peak temperature of the fluoropolymer can be increased, and fibrillatable and non melt-processible fluoropolymers can be produced. By using a chain transfer agent in the polymerization of fluoromonomers and appropriately selecting the type and added amount of the chain transfer agent, the peak temperature of the fluoropolymer can be decreased, and non-fibrillatable and not non melt-processible fluoropolymers can be produced.

The fluoropolymer of the present disclosure can be produced by a polymerization method such as bulk polymerization, solution polymerization, suspension polymerization, or emulsion polymerization. A method for producing a fluoropolymer by emulsion polymerization will be described.

The fluoropolymer of the present disclosure can be produced, for example, by polymerizing TFE and perfluoroalkadiene in the presence of an aqueous medium, a polymerization initiator, and a surfactant. More specifically, TFE and perfluoroalkadiene can be polymerized by charging a reactor with TFE, perfluoroalkadiene, an aqueous medium, a surfactant, and optionally other additives; stirring the contents of the reactor; maintaining the reactor at a predetermined polymerization temperature; and then adding a predetermined amount of a polymerization initiator to thereby initiate the polymerization reaction. After the initiation of the polymerization reaction, the components such as TFE, perfluoroalkadiene, the polymerization initiator, and a chain transfer agent may additionally be added depending on the purpose.

The aqueous medium is a reaction medium in which the polymerization is performed, and means a liquid containing water. The aqueous medium may be any medium containing water, and it may be a medium containing water and, for example, any of fluorine-free organic solvents such as alcohols, ethers, and ketones, and/or fluorine-containing organic solvents having a boiling point of 40°C or lower.

The polymerization initiator may be any polymerization initiator capable of generating radicals within the polymerization temperature range, and known oil-soluble and/or water-soluble polymerization initiators may be used. The polymerization initiator may be combined with a reducing agent and the like to form a redox agent, which initiates the polymerization.

The amount of the polymerization initiator added is preferably 1 ppm by mass or more, more preferably 5 ppm by mass or more, and preferably 5000 ppm by mass or less, more preferably 1000 ppm by mass or less, further preferably 500 ppm by mass or less, based on the aqueous medium.

The polymerization initiator is preferably a water-soluble radical polymerization initiator, and examples thereof include ammonium salts, potassium salts, and sodium salts of persulfuric acid, perboric acid, perchloric acid, perphosphoric acid, and percarbonic acid, organic peroxides such as disuccinic acid peroxide and diglutaric acid peroxide, t-butyl permaleate, and t-butyl hydroperoxide.

Examples of the surfactant include fluorine-containing surfactants. Examples of the fluorine-containing surfactant include a fluorine-containing compound represented by formula:

$$X\text{-}(CF_2)_{m1}\text{-}COOX$$

wherein X represents H or F, m1 represents an integer of 3 to 5, and X represents H, $NH_4$, or an alkali metal atom; and a fluorine-containing compound represented by formula:

$$CF_3OCF(CF_3)CF_2OCF(CF_3)COOX$$

wherein X represents H, $NH_4$, or an alkali metal atom.

The amount of the surfactant added is preferably 10 ppm by mass to 10% by mass based on the aqueous medium.

In the polymerization, a chain transfer agent may be used. Examples of the chain transfer agent include esters such as dimethyl malonate, diethyl malonate, methyl acetate, ethyl acetate, butyl acetate, and dimethyl succinate, as well as isopentane, methane, ethane, propane, methanol, isopropanol, acetone, various mercaptans, various halogenated hydrocarbons such as carbon tetrachloride, and cyclohexane.

In the polymerization, additives such as a buffer, a pH adjuster, a stabilizing aid, and a dispersion stabilizer can be used.

The stabilizing aid is preferably paraffin wax, fluorine-containing oil, a fluorine-containing solvent, silicone oil, or the like. The stabilizing aids may be used alone or in combination of two or more. The stabilizing aid is more preferably paraffin wax. The paraffin wax may be in the form of liquid, semi-solid, or solid at room temperature, and is preferably a saturated hydrocarbon having 12 or more carbon atoms. Paraffin wax usually preferably has a melting point of 40 to 65°C, and more preferably 50 to 65°C.

The amount of the stabilizing aid used is preferably 0.1 to 12% by mass based on the aqueous medium.

The polymerization can be performed at normal pressure and temperature. Usually, a polymerization temperature is 5 to 120°C and a polymerization pressure is 0.05 to 10 MPaG. The polymerization temperature and the polymerization pressure are determined as appropriate in accordance with the types of the monomers, the molecular weight of the target fluoropolymer, and the reaction rate, for example.

The polymerization of TFE and perfluoroalkadiene in an aqueous medium provides an aqueous dispersion containing a fluoropolymer. The content of the fluoropolymer in the aqueous dispersion as polymerized is usually 8 to 50% by mass based on the aqueous dispersion.

The fluoropolymer can be recovered by agglomerating the fluoropolymer in the aqueous dispersion. The method of agglomerating the fluoropolymer is not limited. For example, the fluoropolymer can be agglomerated by vigorous stirring of the aqueous dispersion. The fluoropolymer may be agglomerated by adding a water-soluble organic compound such as methanol or acetone; an inorganic salt such as potassium nitrate or ammonium carbonate; or an inorganic acid such as hydrochloric acid, sulfuric acid, or nitric acid as a coagulant to the aqueous dispersion, followed by stirring. After agglomerating the fluoropolymer, the agglomerated fluoropolymer can be recovered as a wet polymer.

The resulting wet polymer may be dried. The drying temperature is preferably 10 to 300°C, and more preferably 100 to 300°C. By sufficient drying, a fluoropolymer powder can be obtained. The fluoropolymer of the present disclosure may be an aqueous dispersion in which fluoropolymer particles are dispersed in an aqueous medium, or may be a fluoropolymer powder.

The fluoropolymer of the present disclosure (hereinafter may be referred to as fluoropolymer (P)) can be used in various applications.

The fluoropolymer of the present disclosure can be easily produced and is excellent in storage stability, heat resistance, and creep resistance, and therefore can be suitably used for various molded articles. In particular, when the fluoropolymer of the present disclosure is fibrillatable or non-melt processible, it can be suitably used for various molded articles.

The method for forming a fluoropolymer to obtain a molded article may be an ordinary method, and examples thereof include known methods such as a compression forming method, a ram extrusion method, and a paste extrusion method.

The molded article can be utilized in wide applications, and specific examples thereof include packings, gaskets, tubes, linings, coatings, insulating tapes, bearings, air dome roof membranes, gas/liquid separation membranes, separators, and supported membranes. The shape of the formed article is not limited, but examples thereof include tube, film, sheet, fiber, and porous membrane shapes.

Further, the fluoropolymer of the present disclosure can be easily produced and is excellent in storage stability, heat resistance, and creep resistance, and therefore can be suitably used as, for example, a filler. The fluoropolymer of the present disclosure is obtained by polymerizing perfluoroalkadiene, but since the double bonds possessed by perfluoroalkadiene disappear by polymerization, the fluoropolymer of the present disclosure has no or few double bonds. Therefore, the fluoropolymers of the present disclosure function as a filler, but not as a cross-linking agent.

The fluoropolymers of the present disclosure can also be used as an additive. In particular, when the fluoropolymer of the present disclosure is not fibrillatable or not non-melt processible, the fluoropolymer of the present disclosure may be suitably used as an additive.

The fluoropolymer of the present disclosure can suitably be used as molding materials, inks, cosmetics, coating materials, greases, parts of office automation equipment, additives for modifying toners, and additives for plating solutions, for example. Examples of the molding materials include engineering plastics such as polyoxybenzoyl polyester, polyimide, polyamide, polyamide-imide, polyacetal, polycarbonate, and polyphenylene sulfide.

The fluoropolymer of the present disclosure can be used as additives for molding materials for improving the non-stickiness and sliding property of rollers of copiers, for use in improving the texture of molded articles of engineering plastics, such as surface sheets of furniture, dashboards of automobiles, and covers of home appliances, and for use in improving the lubricity and abrasion resistance of machine elements generating mechanical friction, such as light-load bearings, gears, cams, buttons of push-button telephones, movie projectors, camera components, and sliding materials, and processing aids for engineering plastics.

The fluoropolymer of the present disclosure can be used as an additive for a coating material for the purpose of improving the lubricity of a varnish or a paint. The fluoropolymer of the present disclosure can be used as an additive for cosmetics for the purpose of improving the lubricity of cosmetics such as foundation and the like.

The fluoropolymer of the present disclosure is also suitable for use in improving the oil-repellency or water-repellency of wax or the like, or in improving the lubricity of grease or toner.

The fluoropolymer of the present disclosure can be used as electrode binders of secondary batteries and fuel cells, hardness adjusters for electrode binders, and water-repellents for electrode surfaces.

The present disclosure also relates to a composition comprising a fluoropolymer (P) and a polymer (E) different from the fluoropolymer (P). The fluoropolymer (P) contained in the composition of the present disclosure can be easily produced, and is also excellent in storage stability, heat resistance, and creep resistance. Therefore, the composition of the present disclosure can be produced at low cost, and in addition, by using the composition of the present disclosure, a crosslinked product having excellent plasma resistance and a small compression set even after use under severe conditions can be obtained.

Examples of the polymer (E) include a resin and an elastomer.

Examples of the resin include fluororesins, polyamide-type resins, polyolefin resins, vinyl chloride resins, polyurethane resins, polyester resins, polyaramide resins, polyimide resins, polyamideimide resins, polyphenylene oxide resins, polyacetal resins, polycarbonate resins, acrylic resins, styrene resins, acrylonitrile/butadiene/styrene resins (ABS), cellulose resins, polyetheretherketone resins (PEEK), polysulfone resins, polyethersulfone resins (PES), polyetherimide resins, resins composed of ethylene/vinyl alcohol copolymers, polyphenylene sulfide resins, polybutylene naphthalate resins, polybutylene terephthalate resins, and polyphthalamide (PPA).

Examples of the fluororesin include TFE/perfluoro(alkyl vinyl ether) copolymers (PFA), TFE/hexafluoropropylene copolymers (FEP), ethylene/TFE copolymers (ETFE), ethylene/TFE/hexafluoropropylene copolymers, polychlorotrifluoroethylene, chlorotrifluoroethylene/TFE copolymers, ethylene/chlorotrifluoroethylene copolymers, polyvinylidene fluoride (PVdF), TFE/vinylidene fluoride copolymers, and polyvinyl fluoride.

The polymer (E) is preferably an elastomer. Examples of the elastomer include diene-based rubber such as acrylonitrile-butadiene rubber (NBR) and hydride thereof (HNBR), styrene-butadiene rubber (SBR), chloroprene rubber (CR), butadiene rubber (BR), natural rubber (NR), and isoprene rubber (IR), ethylene-propylene-termonomer copolymerized rubber, silicone rubber, butyl rubber, epichlorohydrin rubber, acrylic rubber, chlorinated polyethylene (CPE), polyblend of acrylonitrile-butadiene rubber and vinyl chloride (PVC-NBR), ethylene propylene diene rubber (EPDM), chlorosulfonated polyethylene (CSM), and fluorine-containing elastomers.

The polymer (E) is preferably a fluorine-containing elastomer. The fluorine-containing elastomer may be a partially fluorinated elastomer or a perfluoroelastomer, but a perfluoroelastomer is preferred because it is excellent in chemical resistance and heat resistance and exhibits the maximum synergistic effect when used in combination with the fluoropolymer (P).

In the present disclosure, the partially fluorinated elastomer is a fluorine-containing polymer that includes a fluoromonomer unit, has a perfluoromonomer unit content of less than 90 mol% with respect to all the monomer units, has a glass transition temperature of 20°C or lower, and has a melting peak ($\Delta H$) of 4.5 J/g or less.

In the present disclosure, the perfluoroelastomer is a fluorine-containing polymer that has a perfluoromonomer unit content of 90 mol% or more with respect to all the monomer units, has a glass transition temperature of 20°C or lower, and has a melting peak ($\Delta H$) of 4.5 J/g or less, and further, has a fluorine atom concentration in the fluorine-containing polymer of 71% by mass or more. In the present disclosure, the fluorine atom concentration in the fluorine-containing polymer is determined by calculating the concentration (% by mass) of the fluorine atoms included in the fluorine-containing polymer from the type and content of each monomer constituting the fluorine-containing polymer.

In the present disclosure, the perfluoromonomer is a monomer that does not include a carbon atom-hydrogen atom bond in the molecule. The perfluoromonomer may be a monomer in which, in addition to carbon atoms and fluorine atoms, some of the fluorine atoms bonded to carbon atoms are replaced with chlorine atoms, and may have, other than carbon atoms, a nitrogen atom, an oxygen atom, and a sulfur atom. The perfluoromonomer is preferably a monomer in which all the hydrogen atoms are replaced with fluorine atoms. A monomer that provides a crosslinking site does not fall within the scope of the perfluoromonomer.

Examples of the partially fluorinated elastomer include vinylidene fluoride (VdF)-based fluoroelastomers, tetrafluoroethylene (TFE)/propylene (Pr)-based fluoroelastomers, tetrafluoroethylene (TFE)/propylene/vinylidene fluoride (VdF)-based fluoroelastomers, ethylene/hexafluoropropylene (HFP)-based fluoroelastomers, ethylene/hexafluoropropylene (HFP)/vinylidene fluoride (VdF)-based fluoroelastomers, ethylene/hexafluoropropylene (HFP)/tetrafluoroethylene (TFE)-based fluoroelastomers, and the like. Among these, at least one selected from the group consisting of vinylidene fluoride-based fluoroelastomers and tetrafluoroethylene/propylene-based fluoroelastomers is preferable.

The vinylidene fluoride-based fluoroelastomer is preferably a copolymer comprising 45 to 85 mol% of vinylidene fluoride and 55 to 15 mol% of at least one other monomer copolymerizable with vinylidene fluoride. Preferably, the vinylidene fluoride-based fluoroelastomer is a copolymer comprising 50 to 80 mol% of vinylidene fluoride and 50 to 20 mol% of at least one other monomer copolymerizable with vinylidene fluoride.

In the present disclosure, the content of each monomer constituting the fluorine-containing elastomer can be calculated by appropriately combining NMR, FT-IR, elemental analysis, and X-ray fluorescence analysis according to the type of monomer.

Examples of the at least one other monomer copolymerizable with vinylidene fluoride include TFE, HFP, fluoroalkyl vinyl ether, chlorotrifluoroethylene (CTFE), trifluoroethylene, trifluoropropylene, pentafluoropropylene, trifluorobutene, tetrafluoroisobutene, hexafluoroisobutene, vinyl fluoride, a fluoromonomer represented by formula (11): $CHX^{11}=CX^{11}Rf^{11}$ wherein of two $X^{11}$, one is H and the other is F, and $Rf^{11}$ is a linear or branched fluoroalkyl group having 1 to 12 carbon atoms, and a fluoromonomer represented by formula (12): $CH_2=CH-(CF_2)_n-X^{12}$ wherein $X^{12}$ is H or F, and n is an integer of 3 to 10; a monomer that provides a crosslinking site; and a non-fluorinated monomer such as ethylene, propylene, and alkyl vinyl ether. These can be used alone or in any combination. Among these, it is preferable to use at least one selected from the group consisting of TFE, HFP, fluoroalkyl vinyl ether and CTFE.

The fluoroalkyl vinyl ether is preferably at least one selected from the group consisting of a fluoromonomer represented by formula (13):

$CF_2=CF-ORf^{13}$

wherein $Rf^{13}$ represents a perfluoroalkyl group having 1 to 8 carbon atoms;
a fluoromonomer represented by formula (14):

$CF_2=CFOCF_2ORf^{14}$

wherein $Rf^{14}$ is a linear or branched perfluoroalkyl group having 1 to 6 carbon atoms, a cyclic perfluoroalkyl group having 5 to 6 carbon atoms, or a linear or branched perfluorooxyalkyl group having 2 to 6 carbon atoms including 1 to 3 oxygen atoms; and
a fluoromonomer represented by formula (15):

$CF_2=CFO(CF_2CF(Y^{15})O)_m(CF_2)_nF$

wherein $Y^{15}$ represents a fluorine atom or a trifluoromethyl group, m is an integer of 1 to 4, and n is an integer of 1 to 4. More preferably, the fluoroalkyl vinyl ether is a fluoromonomer represented by formula (13).

Specific examples of the vinylidene fluoride-based fluoroelastomer include a VdF/HFP-based rubber, a VdF/HFP/TFE-based rubber, VdF/CTFE-based rubber, a VdF/CTFE/TFE-based rubber, a VdF/fluoromonomer represented by formula (11)-based rubber, a VdF/fluoromonomer represented by formula (11)/TFE-based rubber, a VdF/perfluoro(methyl vinyl ether) [PMVE]-based rubber, a VdF/PMVE/TFE-based rubber, a VdF/PMVE/TFE/HFP-based rubber and the like. The VdF/fluoromonomer represented by formula (11)-based rubber is preferably a VdF/$CH_2=CFCF_3$-based rubber, and the VdF/fluoromonomer represented by formula (11)/TFE-based rubber is preferably VdF/TFE/$CH_2=CFCF_3$-based rubber.

The VdF/$CH_2=CFCF_3$-based rubber is preferably a copolymer comprising 40 to 99.5 mol% of VdF and 0.5 to 60 mol% of $CH_2=CFCF_3$, and more preferably 50 to 85 mol% of VdF and 15 to 50 mol% of $CH_2=CFCF_3$.

The tetrafluoroethylene/propylene-based fluoroelastomer is preferably a copolymer comprising 45 to 70 mol% of tetrafluoroethylene, 55 to 30 mol% of propylene, and 0 to 5 mol% of fluoromonomer that provides a crosslinking site.

The fluorine-containing elastomer may be a perfluoroelastomer. Examples of the perfluoroelastomer include at least one selected from the group consisting of a perfluoroelastomer including TFE unit, for example, a copolymer of TFE/fluoromonomer represented by formula (13), (14), or (15), and a copolymer of TFE/fluoromonomer represented by formula (13), (14), or (15)/monomer that provides a crosslinking site.

In the case of a TFE/PMVE copolymer, the compositional features thereof are preferably 45 to 90/10 to 55 (mol%), more preferably 55 to 80/20 to 45, and further preferably 55 to 70/30 to 45.

In the case of a copolymer of TFE/PMVE/monomer that provides a crosslinking site, the compositional features thereof are preferably 45 to 89.9/10 to 54.9/0.01 to 4 (mol%), more preferably 55 to 77.9/20 to 49.9/0.1 to 3.5, and further preferably 55 to 69.8/30 to 44.8/0.2 to 3.

In the case of a copolymer of TFE/fluoromonomer represented by formula (13), (14), or (15) having 4 to 12 carbon atoms, the compositional features thereof are preferably 50 to 90/10 to 50 (mol%), more preferably 60 to 88/12 to 40, and further preferably 65 to 85/15 to 35.

In the case of a copolymer of TFE/fluoromonomer represented by formula (13), (14), or (15) having 4 to 12 carbon atoms/monomer that provides a crosslinking site, the compositional features thereof are preferably 50 to 89.9/10 to 49.9/0.01 to 4 (mol%), more preferably 60 to 87.9/12 to 39.9/0.1 to 3.5, and further preferably 65 to 84.8/15 to 34.8/0.2 to 3.

If the compositional features of these copolymers are beyond these ranges, their nature as a rubber elastic body is lost, and the copolymer tends to have a nature close to that of a resin.

Examples of the perfluoroelastomer include at least one selected from the group consisting of a copolymer of TFE/fluoromonomer represented by formula (15)/monomer that provides a crosslinking site, a copolymer of TFE/fluoromonomer represented by formula (15), a copolymer of TFE/fluoromonomer represented by formula (13), and a copolymer of TFE/fluoromonomer represented by formula (13)/monomer that provides a crosslinking site.

Examples of the perfluoroelastomer may include the perfluoroelastomers described in International Publication No. WO 97/24381, Japanese Patent Publication No. 61-57324, Japanese Patent Publication No. 4-81608, Japanese Patent Publication No. 5-13961, and the like.

The monomer that provides a crosslinking site is a monomer (cure site monomer) having a crosslinkable group that provides the fluorine-containing elastomer with a crosslinking site for forming a crosslink by a cross-linking agent.

Examples of the monomer that provides a crosslinking site include monomers represented by formula (16):

$CX^4_2=CX^5R_f^2X^6$

wherein $X^4$ and $X^5$ are each independently H, F, or an alkyl group having 1 to 5 carbon atoms, $R_f^2$ is a linear or branched alkylene group or oxyalkylene group which may have one or more ether-bonding oxygen atoms, which may have an aromatic ring, and in which a part or all of its hydrogen atoms may be replaced with fluorine atoms, and $X^6$ is an iodine atom, a bromine atom, a nitrile group, a carboxyl group, an alkoxycarbonyl group, a hydroxyl group, a vinyl group, an azide group, a sulfonyl azide group, a carbonyl azide group, or an alkyne group. The alkyne group may be an ethynyl group.

The monomer that provides a crosslinking site is preferably, from among the following, at least one selected from the group consisting of:

a fluoromonomer represented by formula (17):

$$CX^{16}_2=CX^{16}\text{-}Rf^{16}CHR^{16}X^{17}$$

wherein each $X^{16}$ is independently a hydrogen atom, a fluorine atom, or $CH_3$, $Rf^{16}$ is a fluoroalkylene group, a perfluoroalkylene group, a fluoro(poly)oxyalkylene group, or a perfluoro(poly)oxyalkylene group, $R^{16}$ is a hydrogen atom or $CH_3$, and $X^{17}$ is an iodine atom or a bromine atom;

a fluoromonomer represented by formula (18):

$$CX^{16}_2=CX^{16}\text{-}Rf^{17}X^{17}$$

wherein each $X^{16}$ is independently a hydrogen atom, a fluorine atom, or $CH_3$, $Rf^{17}$ is a fluoroalkylene group, a perfluoroalkylene group, a fluoro(poly)oxyalkylene group, or a perfluoro(poly)oxyalkylene group, and $X^{17}$ is an iodine atom or a bromine atom;

a fluoromonomer represented by formula (19):

$$CF_2=CFO(CF_2CF(CF_3)O)_m(CF_2)_n\text{-}X^{18}$$

wherein m is an integer of 0 to 5, n is an integer of 1 to 3, and $X^{18}$ is a cyano group, an azide group, a sulfonyl azide group, a carbonyl azide group, a carboxyl group, an alkoxycarbonyl group, an alkyne group, an iodine atom, a bromine atom, or $-CH_2I$;

a fluoromonomer represented by formula (20):

$$CH_2=CFCF_2O(CF(CF_3)CF_2O)_m(CF(CF_3))_n\text{-}X^{19}$$

wherein m is an integer of 0 to 5, n is an integer of 1 to 3, and $X^{19}$ is a cyano group, a carboxyl group, an alkoxycarbonyl group, an iodine atom, a bromine atom, or $-CH_2OH$; and

a monomer represented by formula (21):

$$CR^{20}_2=CR^{20}\text{-}Z\text{-}CR^{20}=CR^{20}_2$$

wherein each $R^{20}$ is independently a hydrogen atom or an alkyl group having 1 to 5 carbon atoms, and Z is a linear or branched alkylene group having 1 to 18 carbon atoms which may have an oxygen atom, a cycloalkylene group having 3 to 18 carbon atoms, an alkylene group or an oxyalkylene group having 1 to 10 carbon atoms which is at least partially fluorinated, or a (per)fluoropolyoxyalkylene group having a molecular weight of 500 to 10,000 and represented by

$$-(Q)_p\text{-}CF_2O\text{-}(CF_2CF_2O)_m(CF_2O)_n\text{-}CF_2\text{-}(Q)_p\text{-}$$

wherein Q is an alkylene group or an oxyalkylene group, P is 0 or 1, and m/n is 0.2 to 5.

$X^{16}$ is preferably a fluorine atom. $Rf^{16}$ and $Rf^{17}$ are preferably a perfluoroalkylene group having 1 to 5 carbon atoms. $R^{16}$ is preferably a hydrogen atom. $X^{18}$ is preferably a cyano group, an alkoxycarbonyl group, an iodine atom, a bromine atom, or $-CH_2I$. $X^{19}$ is preferably a cyano group, an alkoxycarbonyl group, an iodine atom, a bromine atom, or $-CH_2OH$.

The monomer that provides the crosslinking site is preferably at least one selected from the group consisting of $CF_2=CFOCF_2CF(CF_3)OCF_2CF_2CN$, $CF_2=CFOCF_2CF(CF_3)OCF_2CF_2COOH$, $CF_2=CFOCF_2CF(CF_3)OCF_2CF_2CH_2I$, $CF_2=CFOCF_2CF_2CH_2I$, $CH_2=CFCF_2OCF(CF_3)CF_2OCF(CF_3)CN$, $CH_2=CFCF_2OCF(CF_3)CF_2OCF(CF_3)COOH$, $CH_2=CFCF_2OCF(CF_3)CF_2OCF(CF_3)CH_2OH$, $CH_2=CHCF_2CF_2I$, $CH_2=CH(CF_2)_2CH=CH_2$, $CH_2=CH(CF_2)_6CH=CH_2$, and $CF_2=CFO(CF_2)_5CN$, and more preferably at least one selected from the group consisting of $CF_2=CFOCF_2CF(CF_3)OCF_2CF_2CN$ and $CF_2=CFOCF_2CF_2CH_2I$.

From the viewpoint of excellent compression set characteristics at high temperature, the fluorine-containing elastomer has a glass transition temperature of preferably -70°C or higher, more preferably -60°C or higher, and further preferably -50°C or higher. Also, it preferably has a glass transition temperature of 5°C or lower, more preferably 0°C or lower, and further preferably -3°C or lower, from the viewpoint of good low-temperature resistance.

The glass transition temperature is determined as follows: using a differential scanning calorimeter (DSC822e, manufactured by Mettler Toledo), a DSC curve is obtained by heating 10 mg of a sample at 10 °C/min; and the temperature is read at the intermediate point of two intersections between each of the extension lines of the baselines before and after the secondary transition of the DSC curve and the tangent line at the inflection point of the DSC curve.

From the viewpoint of good heat resistance, the fluorine-containing elastomer has a Mooney viscosity ML (1 + 20) at 170°C of preferably 30 or more, more preferably 40 or more, and further preferably 50 or more. Further, from the viewpoint of good processability, the fluorine-containing elastomer has a Mooney viscosity ML of preferably 150 or less, more preferably 120 or less, and further preferably 110 or less.

From the viewpoint of good heat resistance, the fluorine-containing elastomer has a Mooney viscosity ML (1 + 20) at 140°C of preferably 30 or more, more preferably 40 or more, and further preferably 50 or more. Further, from the viewpoint of good processability, the fluorine-containing elastomer has a Mooney viscosity ML of preferably 180 or less, more preferably 150 or less, and further preferably 110 or less.

From the viewpoint of good heat resistance, the fluorine-containing elastomer has a Mooney viscosity ML (1 + 10) at 100°C of preferably 10 or more, more preferably 20 or more, and further preferably 30 or more. Further, from the viewpoint of good processability, the fluorine-containing elastomer has a Mooney viscosity ML of preferably 120 or less, more preferably 100 or less, and further preferably 80 or less.

The Mooney viscosity can be measured at 170°C, 140°C, or 100°C according to JIS K6300 by using a Mooney viscometer MV2000E manufactured by ALPHA TECHNOLOGIES.

The above-described partially fluorinated elastomer and perfluoroelastomer can be produced by a conventional method. However, from the viewpoint of a narrow molecular weight distribution of the obtained polymer, easy control of the molecular weight, and being able to introduce an iodine atom or a bromine atom to a terminal, an iodine compound or a bromine compound can also be used as a chain transfer agent. Examples of a polymerization method performed using an iodine compound or a bromine compound include a method in which emulsion polymerization is carried out in an aqueous medium under pressure in the presence of the iodine compound or the bromine compound in a substantially oxygen-free state (iodine transfer polymerization method). Typical examples of the iodine compound or bromine compound to be used include, for example, a compound represented by the formula:

$$R^{21}I_xBr_y$$

wherein x and y are each an integer of 0 to 2 and satisfy $1 \leq x + y \leq 2$; and $R^{21}$ is a saturated or unsaturated fluorohydrocarbon group or chlorofluorohydrocarbon group having 1 to 16 carbon atoms or a hydrocarbon group having 1 to 3 carbon atoms, which may contain an oxygen atom. By using an iodine compound or a bromine compound, an iodine atom or a bromine atom is introduced into the polymer to function as a cross-linking point.

Examples of the iodine compound or bromine compound include 1,3-diiodoperfluoropropane, 2-iodoperfluoropropane, 1,3-diiodo-2-chloroperfluoropropane, 1,4-diiodoperfluorobutane, 1,5-diiodo-2,4-dichloroperfluoropentane, 1,6-diiodoperfluorohexane, 1,8-diiodoperfluorooctane, 1,12-diiodoperfluorododecane, 1,16-diiodoperfluorohexadecane, diiodomethane, 1,2-diiodoethane, 1,3-diiodo-n-propane, $CF_2Br_2$, $BrCF_2CF_2Br$, $CF_3CFBrCF_2Br$, $CFClBr_2$, $BrCF_2CFClBr$, CFBrClCFClBr, $BrCF_2CF_2CF_2Br$, $BrCF_2CFBrOCF_3$, 1-bromo-2-iodoperfluoroethane, 1-bromo-3-iodoperfluoropropane, 1-bromo-4-iodoperfluorobutane, 2-bromo-3-iodoperfluorobutane, 3-bromo-4-iodoperfluorobutene-1,2-bromo-4-iodoperfluorobutene-1, and a monoiodo- and monobromo-substitution product, diiodo- and monobromo-substitution product, and (2-iodoethyl)- and (2-bromoethyl)-substitution product of benzene. These compounds may be used alone or in any combination.

Among these, it is preferable to use 1,4-diiodoperfluorobutane, 1,6-diiodoperfluorohexane, or 2-iodoperfluoropropane from the viewpoint of polymerization reactivity, cross-linking reactivity, availability, and the like.

The above-described fluorine-containing elastomer preferably has a cyano group (-CN group). The fluorine-containing elastomer having a cyano group (-CN group) can be crosslinked by cyclotrimerization of the cyano group to form a triazine ring, and can impart excellent compression set characteristics and heat resistance to a crosslinked product.

The fluorine-containing elastomer having a cyano group preferably has a cyano group (-CN group) at a main chain terminal and/or in a side chain.

Examples of the fluorine-containing elastomer having a cyano group (-CN group) at a terminal of the main chain and/or in a side chain include a perfluoroelastomer and a partially fluorinated elastomer.

Examples of the perfluoroelastomer having a cyano group (-CN group) at a terminal of the main chain and/or in a side chain include, copolymers in which the monomer that provides a crosslinking site is a monomer having a cyano group (-CN group) among the above-described copolymers of TFE/fluoromonomer represented by formula (13), (14), or

(15)/monomer that provides a crosslinking site. In this case, the content of the monomer unit having a cyano group (-CN group) may be 0.1 to 5 mol% with respect to the total amount of the TFE unit and the fluoromonomer unit represented by formula (13), (14), or (15), from the viewpoint of good crosslinking characteristics and heat resistance, and may even be 0.3 to 3 mol%. Even more preferable compositional features are as described above.

Further, examples of the monomer having a cyano group (-CN group) include monomers represented by the following formulas:

Formula: $CY^1_2=CY^1(CF_2)_n-CN$

wherein each $Y^1$ is independently a hydrogen atom or a fluorine atom, and n is an integer of 1 to 8;

Formula: $CF_2=CFCF_2Rf^8-CN$

wherein $Rf^8$ is $-(OCF_2)_n-$ or $-(OCF(CF_3))_n-$, and n is an integer of 0 to 5;

Formula: $CF_2=CFCF_2(OCF(CF_3)CF_2)_m(OCH_2CF_2CF_2)_nOCH_2CF_2-CN$

wherein m is an integer of 0 to 5, and n is an integer of 0 to 5;

Formula: $CF_2=CFCF_2(OCH_2CF_2CF_2)_m(OCF(CF_3)CF_2)_nOCF(CF_3)-CN$

wherein m is an integer of 0 to 5, and n is an integer of 0 to 5;

Formula: $CF_2=CF(OCF_2CF(CF_3))_mO(CF_2)_n-CN$

wherein m is an integer of 0 to 5, and n is an integer of 1 to 8;

Formula: $CF_2=CF(OCF_2CF(CF_3))_m-CN$

wherein m is an integer of 1 to 5;

Formula: $CF_2=CFOCF_2(CF(CF_3)OCF_2)_nCF(-CN)CF_3$

wherein n is an integer of 1 to 4;

Formula: $CF_2=CFO(CF_2)_nOCF(CF_3)-CN$

wherein n is an integer of 2 to 5;

Formula: $CF_2=CFO(CF_2)_n-(C_6H_4)-CN$

wherein n is an integer of 1 to 6;

Formula: $CF_2=CF(OCF_2CF(CF_3))_nOCF_2CF(CF_3)-CN$

wherein n is an integer of 1 to 2;

Formula: $CH_2=CFCF_2O(CF(CF_3)CF_2O)_nCF(CF_3)-CN$

wherein n is an integer of 0 to 5;

Formula: $CF_2=CFO(CF_2CF(CF_3)O)_m(CF_2)_n-CN$

wherein m is an integer of 0 to 5, and n is an integer of 1 to 3;

Formula: $CH_2=CFCF_2OCF(CF_3)OCF(CF_3)-CN$;

Formula: $CH_2=CFCF_2OCH_2CF_2-CN$;

Formula: $CF_2=CFO(CF_2CF(CF_3)O)_mCF_2CF(CF_3)-CN$

wherein m is an integer of 0 or more;

Formula: $CF_2=CFOCF(CF_3)CF_2O(CF_2)_n-CN$

wherein n is an integer of 1 or more; and

Formula: $CF_2=CFOCF_2OCF_2CF(CF_3)OCF_2-CN$.

These monomers can be used alone or in any combination.

Among the above, a monomer represented by the

Formula: $CF_2=CF(OCF_2CF(CF_3))_mO(CF_2)_n-CN$

wherein m is an integer of 0 to 5, n is an integer of 1 to 8; and $CF_2=CFOCF_2CF(CF_3)OCF_2CF_2CN$ is more preferable.

These perfluoroelastomers can be produced by a conventional method.

Specific examples of the perfluoroelastomer may include the fluoroelastomers described in International Publication No. WO 97/24381, Japanese Patent Publication No. 61-57324, Japanese Patent Publication No. 4-81608, Japanese Patent Publication No. 5-13961, and the like.

Examples of the partially fluorinated elastomer having a cyano group (-CN group) at a terminal of the main chain and/or in a side chain include vinylidene fluoride (VdF)-based fluoroelastomers, tetrafluoroethylene (TFE)/propylene-based fluoroelastomers, tetrafluoroethylene (TFE)/propylene/vinylidene fluoride (VdF)-based fluoroelastomers, ethylene/hexafluoroethylene (HFP)-based fluoroelastomers, ethylene/hexafluoropropylene (HFP)/vinylidene fluoride (VdF)-based fluoroelastomers, ethylene/hexafluoropropylene (HFP)/tetrafluoroethylene (TFE)-based fluoroelastomers, fluorinesilicone-based fluoroelastomers, fluorophosphazene fluoroelastomers, and the like. These can each be used alone, or in any combination as long as the effects of the present disclosure are not impaired.

The vinylidene fluoride-based fluoroelastomer is a fluorine-containing copolymer comprising 45 to 85 mol% of vinylidene fluoride and 55 to 15 mol% of at least one other monomer copolymerizable with vinylidene fluoride. Preferably, the vinylidene fluoride-based fluoroelastomer is a fluorine-containing copolymer comprising 50 to 80 mol% of vinylidene fluoride and 50 to 20 mol% of at least one other monomer copolymerizable with vinylidene fluoride.

Examples of the at least one other monomer copolymerizable with vinylidene fluoride include a fluoromonomer such as TFE, CTFE, trifluoroethylene, HFP, trifluoropropylene, tetrafluoropropylene, pentafluoropropylene, trifluorobutene, tetrafluoroisobutene, perfluoro(alkyl vinyl ether) (PAVE), and vinyl fluoride, and non-fluorinated monomers such as ethylene, propylene and alkyl vinyl ether. These can be used alone or in any combination. Among these, TFE, HFP, and perfluoro(alkyl vinyl ether) are preferable.

Specific examples of the rubber include VdF-HFP-based rubber, VdF-HFP-TFE-based rubber, VdF-CTFE-based rubber, VdF-CTFE-TFE-based rubber, and the like.

These partially fluorinated elastomers can be produced by a conventional method.

Further, as the fluorine-containing elastomer, a thermoplastic fluoroelastomer comprising an elastomeric fluorine-containing polymer chain segment and a non-elastomeric fluorine-containing polymer chain segment may be used.

The content of the fluoropolymer (P) in the composition of the present disclosure is preferably 0.5 to 100 parts by mass, more preferably 5 to 50 parts by mass, and further preferably 10 to 40 parts by mass, based on 100 parts by mass of the polymer (E). Further, when the polymer (E) is a fluorine-containing elastomer, the content of the fluoropolymer (P) in the composition of the present disclosure is preferably 0.5 to 100 parts by mass, more preferably 5 to 50 parts by mass, further preferably 10 to 40 parts by mass, based on 100 parts by mass of the fluorine-containing elastomer.

<Other components>

The composition of the present disclosure may further contain a filler (excluding the fluoropolymer (P)).

Examples of the filler include an imide-based filler having an imide structure such as polyimide, polyamideimide, and polyetherimide, an organic filler made of engineering plastic such as polyarylate, polysulfone, polyethersulfone, polyphenylene sulfide, polyether ether ketone, polyether ketone, and polyoxybenzoate, a metal oxide filler such as silicon oxide, aluminum oxide, and yttrium oxide, a metal carbide such as silicon carbide and aluminum carbide, a metal nitride filler such as silicon nitride and aluminum nitride, and an inorganic filler such as carbon black, aluminum fluoride, and carbon fluoride.

Among these, from the viewpoint of shielding effects for various plasmas, carbon black, aluminum oxide, silicon oxide, yttrium oxide, silicon carbide, silicon nitride, polyimide, and fluorocarbon are preferable.

Further, the inorganic filler and organic filler may be used alone or blended in a combination of two or more thereof.

The content of the filler is preferably 0.01 to 100 parts by mass, more preferably 0.05 to 50 parts by mass, further preferably 0.05 to 10 parts by mass, and particularly preferably 0.05 to 3 parts by mass, based on 100 parts by mass of the polymer (E).

Especially in fields not requiring high purity and non-contamination properties, an ordinary additive that is blended in the composition, such as a processing aid, a plasticizer, and a colorant, can optionally be blended. One or more common cross-linking agents and cross-linking aids different from those described above may also be blended.

The composition may contain an organic basic compound. Examples of the organic basic compound include: an octadecylamine of formula: $CH_3(CH_2)_{17}$-$NH_2$;

an erucamide of formula: $H_2N$-C(O)-$(CH_2)_{11}$-CH=CH-$(CH_2)_7CH_3$;
an oleamide of formula: $H_2N$-C(O)-$(CH_2)_7$-CH=CH-$(CH_2)_7CH_3$;
a hexamethylenediamine of formula: $H_2N$-$(CH_2)_6$-$NH_2$; and
a 1,8-diazabicycloundec-7-en (DBU) of formula:

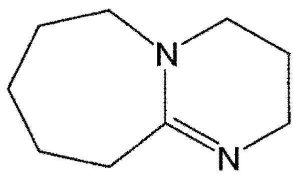

and the like.

The composition of the present disclosure preferably further comprises at least one selected from the group consisting of an inorganic nitride, an organotin compound, an ammonia-generating compound, and a cross-linking agent. In particular, when the polymer (E) is an elastomer, it is preferable to use these. When the composition of the present disclosure contains these components such as a cross-linking agent, a crosslinked product can be easily obtained from the composition of the present disclosure. Suitable configurations of the composition in a case where the polymer (E) is a fluorine-containing elastomer will be described below.

The inorganic nitride is not limited, but examples thereof include silicon nitride ($Si_3N_4$), lithium nitride, titanium nitride, aluminum nitride, boron nitride, vanadium nitride, and zirconium nitride. Among these, silicon nitride is preferable because it can supply nano-sized fine particles.

Examples of the organotin compound include tetraphenyltin and triphenyltin.

As the ammonia-generating compound, a compound that generates ammonia at 40 to 330°C is preferable.

As the ammonia-generating compound, preferred is urea or a derivative thereof, or an ammonium salt, more preferred is urea or an ammonium salt, and further preferred is urea. The ammonium salt may be either an organic ammonium salt or an inorganic ammonium salt. Also, the ammonia-generating compound may be one that reacts with a minute amount of water to generate ammonia.

Examples of the derivative of urea include biurea, thiourea, urea hydrochloride, and biuret.

Examples of the organic ammonium salt include the compounds described in Japanese Patent Laid-Open No. 9-111081, International Publication No. WO 00/09603, and International Publication No. WO 98/23675, including ammonium salts of polyfluorocarboxylic acids such as ammonium perfluorohexanoate and ammonium perfluorooctanoate; ammonium salts of polyfluorosulfonic acids such as ammonium perfluorohexanesulfonate and ammonium perfluorooctanesulfonate; ammonium salts of polyfluoroalkyl group-containing phosphoric acids or phosphonic acids such as ammonium perfluorohexanephosphate and ammonium perfluorooctanephosphate; and ammonium salts of non-fluorinated carboxylic or sulfonic acids such as ammonium benzoate, ammonium adipate, and ammonium phthalate.

Examples of the inorganic ammonium salt include the compounds described in Japanese Patent Laid-Open No. 9-111081, such as ammonium sulfate, ammonium carbonate, ammonium nitrate, and ammonium phosphate.

In addition, examples of the ammonia-generating compound also include acetaldehyde ammonia, hexamethylenetetramine, formamidine, formamidine hydrochloride, formamidine acetate, t-butyl carbamate, benzyl carbamate, $HCF_2CF_2CH(CH_3)OCONH_2$, and phthalamide.

Examples of the cross-linking agent include cross-linking agents used in peroxide cross-linking, polyol cross-linking, polyamine cross-linking, triazine cross-linking, oxazole cross-linking, imidazole cross-linking, and thiazole cross-linking. When the fluorine-containing elastomer is a fluorine-containing elastomer having a cyano group (-CN group), the

cross-linking agent is preferably at least one selected from the group consisting of an oxazole cross-linking agent, an imidazole cross-linking agent, and a thiazole cross-linking agent.

The cross-linking agent used for peroxide crosslinking may be any organic peroxide that can easily generate a peroxy radical in the presence of heat or a redox system. Specific examples include 1,1-bis(t-butylperoxy)-3,5,5-trimethylcyclohexane, 2,5-dimethylhexane-2,5-dihydroperoxide, di-t-butyl peroxide (Perbutyl D), t-butylcumyl peroxide (Perbutyl C), dicumyl peroxide (Percumyl D, Percumyl D-40, Percumyl D-40 MB(T)), $\alpha,\alpha$-bis(t-butylperoxy)-p-diisopropylbenzene, 2,5-dimethyl-2,5-di(t-butylperoxy)hexane (Perhexa 25B, Perhexa 25B-40), 2,5-dimethyl-2,5-di(t-butylperoxy)hexyne-3 (Perhexyne 25B, Perhexyne 25B-40), benzoyl peroxide, t-butylperoxybenzene, 2,5-dimethyl-2,5-di(benzoylperoxy)hexane (Perhexa 25Z), t-butylperoxy maleate (t-butyl MA), t-butylperoxyisopropyl carbonate (Perbutyl I-75), methyl ethyl ketone peroxide (Permek D (DR), Permek H (HR, HY), Permek N (NR, NY), Permek S (SR), Permek F (FR), Permek G (GR, GY)), cyclohexanone peroxide (Perhexa H), acetylacetone peroxide (Percure AH, AL), 1,1-di(t-hexylperoxy)-3,3,5-trimethylcyclohexane (Perhexa TMH), 1,1-di(t-hexylperoxy)cyclohexane (Perhexa HC), 1,1-di(t-butylperoxy)-2-methyl cyclohexane (Perhexa MC), 1,1-di(t-butylperoxy) cyclohexane (Perhexa C-80(S), Perhexa C-75(EB), Perhexa C(C), Perhexa C-40, Perhexa C-40 MB(S)), 2,2-di(t-butylperoxy)butane (Perhexa 22), butyl 4,4-di- (t-butylperoxy) pentanoate (Perhexa V, Perhexa V-40(F)), 2,2-di(4,4-di-(t-butylperoxy)cyclohexyl)propane (Pertetra A), p-menthane hydroperoxide (Permentha H), diisopropylbenzene hydroperoxide (Percumyl P), 1,1,3,3-tetramethylbutyl hydroperoxide (Perocta H), cumene hydroperoxide (Percumyl H-80), t-butyl hydroperoxide (Perbutyl H-69), di(2-t-butylperoxyisopropyl)benzene (Perbutyl P, Perbutyl P-40, Peroxymon F-40, Perbutyl P-40 MB(K)), di-t-hexyl peroxide (Perhexyl D), diisobutyryl peroxide (Peroyl IB), di(3,5,5-trimethylhexanoyl) peroxide (Peroyl 355(S)), dilauroyl peroxide (Peroyl L), disuccinic peroxide (Peroyl SA), a mixture of di-(3-methylbenzoyl) peroxide, benzoyl (3-methylbenzoyl) peroxide, and dibenzoyl peroxide (Nyper BMT-K40, Nyper BMT-M), dibenzoyl peroxide (Nyper BW, Nyper BO, Nyper FF, Nyper BS, Nyper E, Nyper NS), di(4-methylbenzoyl) peroxide (Nyper PMB), di-n-propyl peroxydicarbonate (Peroyl NPP-50M), diisopropyl peroxydicarbonate (Peroyl IPP-50, Peroyl IPP-27), di(4-t-butylcyclohexyl) peroxydicarbonate (Peroyl TCP), di(2-ethylhexyl) peroxydicarbonate (Peroyl OPP), di-sec-butylperoxydicarbonate (Peroyl SBP), cumyl peroxyneodecanoate (Percumyl ND, Percumyl ND-50E), 1,1,3,3-tetramethylbutylperoxyneodecanoate (Perocta ND, Perocta ND-50E), t-hexyl peroxyneodecanoate (Perhexyl ND, Perhexyl ND-50E), t-butylperoxyneodecanoate (Perbutyl ND, Perbutyl ND-50E), t-butylperoxy neoheptanoate (Perbutyl NHP), t-hexylperoxy pivalate (Perhexyl PV, Perhexyl PV-50E), t-butylperoxy pivalate (Perbutyl PV, Perbutyl PV-40E), 1,1,3,3-tetramethylbutylperoxy-2-ethyl hexanoate (Perocta O), 2,5-dimethyl-2,5-di(2-ethylhexanoylperoxy)hexane (Perhexa 25 O), t-hexyl peroxy-2-ethyl hexanoate (Perhexyl O, Percure HO(N)), t-butylperoxy-2-ethyl hexanoate (Perbutyl O, Percure O), t-hexyl peroxyisopropyl monocarbonate (Perhexyl I), t-butylperoxy-3,5,5-trimethyl hexanoate (Perbutyl 355), t-butylperoxy laurate (Perbutyl L), t-butylperoxy-2-ethylhexyl monocarbonate (Perbutyl E), t-hexyl peroxybenzoate (Perhexyl Z), t-butyl peroxyacetate (Perbutyl A), a mixture of t-butylperoxy-3-methyl benzoate and t-butylperoxy benzoate (Perbutyl ZT), t-butylperoxy benzoate (Perbutyl Z), t-butylperoxyallyl monocarbonate (peromer AC), 3,3',4,4'-tetra(t-butylperoxycarbonyl)benzophenone (BTTB-25), and 2,3-dimethyl-2,3-diphenylbutane (Nofmer BC-90). Preferred among these are dialkyl-type organic peroxides, and particularly preferred is 2,5-dimethyl-2,5-di(t-butylperoxy) hexane. Usually, the type and amount of the organic peroxide are selected in consideration of the amount of active -O-O-, the decomposition temperature, and the like.

Further, the cross-linking aid that can be used in this case may be a compound having a reactivity with a peroxy radical and a polymer radical. Examples thereof include polyfunctional compounds having a functional group such as $-CH=CH_2$, $-CH_2CH=CH_2$, $-CF=CF_2$, $-C(CF_3)=CF_2$, $-C(CH_3)=CF_2$, $-CF=CF(CF_3)$, $-CF=CF(CH_3)$, $-C(C_6H_5)=CF_2$, $-CF=CF(C_6H_5)$, $-CH=CF_2$, $-CF=CHF$, $-C(CF_3)=CHF$, $-CF=CH(CF_3)$, $-CH=CF(CF_3)$ and the like wherein "$C_6H_5$" represents a phenyl radical. Specific examples thereof include triallyl cyanurate, triallyl isocyanurate (TAIC), triacryl formal, triallyl trimerite, N,N'-n-phenylene bismaleimide, dipropargyl terephthalate, diallyl phthalate, tetraallyl terephthalate amide, triallyl phosphate, bismaleimide, fluorinated triallyl isocyanurate (1,3,5-tris(2,3,3-trifluoro-2-propenyl)-1,3,5-triazine 2,4,6-trione), tris(diallylamine)-S-triazine, triallyl phosphite, N,N-diallylacrylamide, 1,6-divinyldodecafluorohexane, and the like.

Further, examples of a cross-linking aid used together with the peroxide cross-linking agent include a compound represented by formula (31):

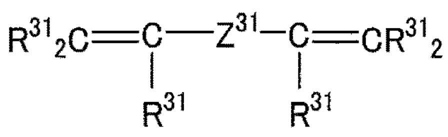

wherein each of the six $R^{31}$ is independently H, a halogen atom, or an optionally halogenated group having 1 to 5 carbon atoms in which an ether bond may be inserted, and $Z^{31}$ is an optionally halogenated linear or branched alkylene group or cycloalkylene group, or a

(per)fluoropolyoxyalkylene group, each of which has 1 to 18 carbon atoms and optionally contains a hetero atom.

Examples of the compound represented by formula (31) include a compound represented by formula (32):

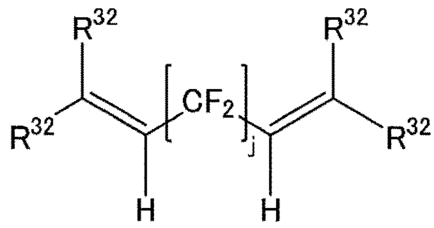

wherein j is an integer of 2 to 10, and preferably an integer of 4 to 8, and each of the four $R^{32}$ is independently H, F or an alkyl group or (per)fluoroalkyl group having 1 to 5 carbon atoms, a compound represented by formula (33):

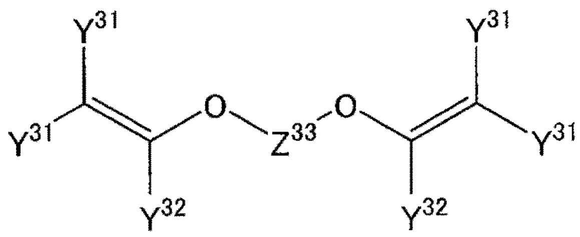

wherein each $Y^{31}$ is independently F, Cl, or H, each $Y^{32}$ is independently F, Cl, H, or $OR^{33}$, where $R^{33}$ is a branched or linear alkyl group that may be partially, substantially, or completely fluorinated or chlorinated, $Z^{33}$ is an optionally fluorinated divalent group having 2 to 10 carbon atoms in which an ether bond may be inserted, preferably $Z^{33}$ is a $-(CF_2)_m-$ group in which m is an integer of 3 to 5, and the compound represented by formula (33) is preferably $F_2C=CF-O-(CF_2)_5-O-CF=CF_2$, and a compound represented by formula (34):

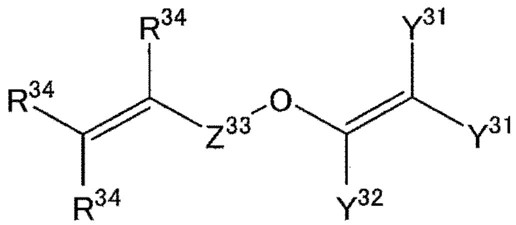

wherein $Y^{31}$, $Y^{32}$, and $Z^{33}$ are as defined above, and each $R^{34}$ is independently H, F, or an alkyl group or (per)fluoroalkyl group having 1 to 5 carbon atoms.

Examples of the cross-linking agent, or cross-linking aid used together with the peroxide cross-linking agent, include compounds having at least one structure represented by formula (35):

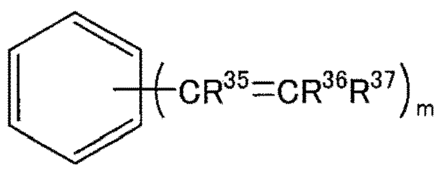

wherein $R^{35}$ to $R^{37}$ are each independently a hydrogen atom, a fluorine atom, an alkyl group, a fluorinated alkyl group, or a substituted or unsubstituted aryl group, and at least one of $R^{35}$ to $R^{37}$ is a fluorine atom or a group containing a fluorine atom; m is an integer of 1 to 5; when m is 2 or more, m-number of $R^{35}$ to $R^{37}$ may be the same or different with each other; and the hydrogen atoms of the benzene ring may be substituted. When m is 1, it is preferable to have two or more of the structures.

Examples of the compound having a structure represented by formula (36) include compounds represented by formula (36):

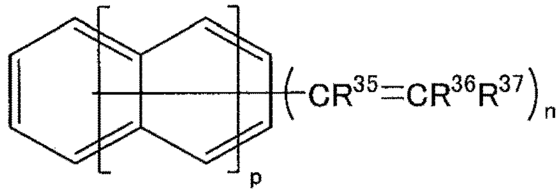

wherein $R^{35}$ to $R^{37}$ are as defined above; p is an integer of 0 to 2; and n is an integer of 2 to 6, compounds represented by formula (37):

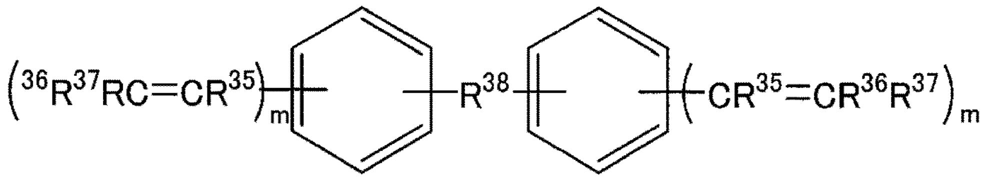

wherein $R^{35}$ to $R^{37}$ are as defined above; $R^{38}$ is a single bond, - $SO_2$-, -O-, -S-, -CO-, a heteroatom-containing group, a substituted or unsubstituted alkylene group, a substituted or unsubstituted cycloalkylene group or a substituted or unsubstituted arylene group; m is an integer of 1 to 5; and a part or all of these groups may be fluorinated.

The heteroatom-containing group is not limited as long as it is a divalent group containing a heteroatom. Examples of the heteroatom include an oxygen atom, a nitrogen atom, a sulfur atom, a boron atom, and a phosphorus atom.

Examples of the cross-linking agent used for polyol crosslinking include polyhydric alcohol compounds such as bisphenol A and bisphenol AF.

Examples of the cross-linking agent used for polyamine crosslinking include polyamine compounds such as hexamethylenediamine carbamate, N,N'-dicinenamiridene-1,6-hexanediamine, and 4,4'-bis(aminocyclohexyl)methane carbamate.

Examples of the cross-linking agents used for oxazole crosslinking, imidazole crosslinking, and thiazole crosslinking include a bisdiaminophenyl-based cross-linking agent, a bis-aminophenol-based cross-linking agent, and a bis-aminothiophenol-based cross-linking agent represented by formula (41):

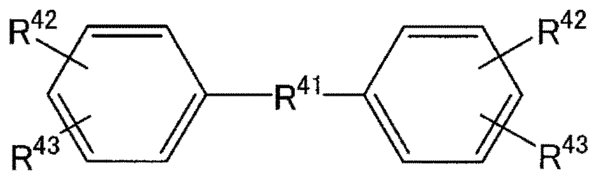

wherein $R^{41}$ is -$SO_2$-, -O-, -CO-, an alkylene group having 1 to 6 carbon atoms, a perfluoroalkylene group having 1 to 10 carbon atoms, a single bond, or a group represented by:

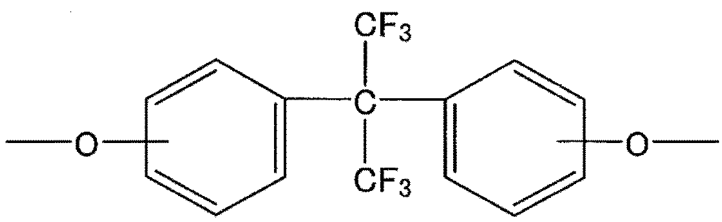

one of $R^{42}$ and $R^{43}$ is -$NH_2$ and the other is -$NHR^{44}$, -$NH_2$, -OH, or -SH, $R^{44}$ is a hydrogen atom, a fluorine atom, or a monovalent organic group, preferably $R^{42}$ is -$NH_2$ and $R^{43}$ is -$NHR^{44}$; preferred specific examples of the alkylene group having 1 to 6 carbon atoms include a methylene group, an ethylene group, a propylene group, a butylene group, a pentylene group, a hexylene group, and the like, and examples of the perfluoroalkylene group having 1 to 10 carbon atoms include:

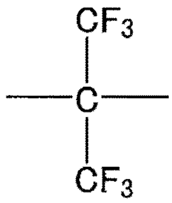

These compounds are known as examples of bisdiaminophenyl compounds in Japanese Patent Publication No. 2-59177, Japanese Patent Laid-Open No. 8-120146, and the like;

a bisamidrazone-based cross-linking agent represented by formula (42) :

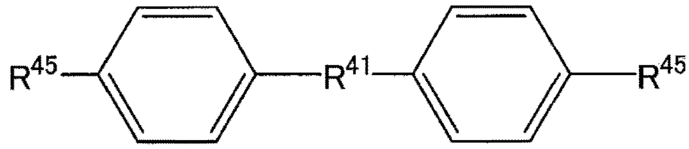

wherein $R^{41}$ is as defined above, and each $R^{45}$ is independently any one of the following groups:

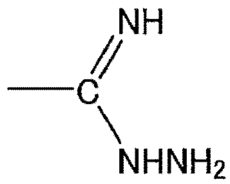

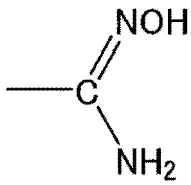

an amidrazone-based cross-linking agent represented by formula (43) :

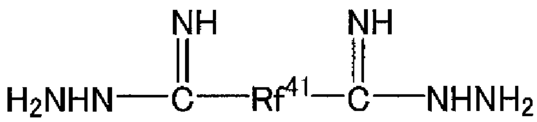

wherein $Rf^{41}$ is a perfluoroalkylene group having 1 to 10 carbon atoms; and a bisamidoxime-based cross-linking agent represented by formula (44) :

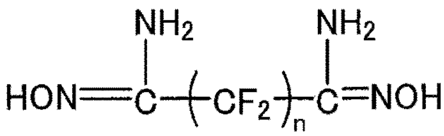

wherein n is an integer of 1 to 10, a compound represented by formula (45): $HN=CR^{45}R^{46}$,
wherein $R^{45}$ is selected from the group consisting of H, $NH_2$, and $NHR^{47}$, $R^{46}$ is selected from the group consisting of Ph, $SO_2H$, $NR^{48}R^{49}$, 2-pyridine, and $CH_2CONH_2$, $R^{47}$ is selected from the group consisting of Ph, $NH_2$, and CN, $R^{48}$ is selected from the group consisting of H, NHPh, $CH_2CONH_2$, a linear alkyl group having 1 to 8 carbon atoms, and a branched alkyl group having 1 to 8 carbon atoms, and $R^{49}$ is selected from the group consisting of Ph, $COOC(CH_3)_3$, $NH_2$, $CH_2COOH$, $CSNH_2$, $CNHNH_3^+Cl^-$, p-phenyl CN,

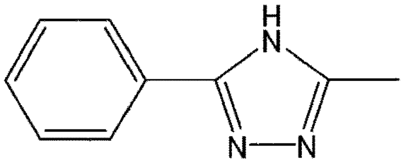

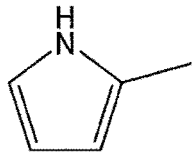

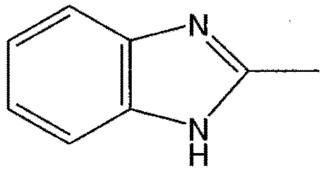

and COPh, and the like. These bisaminophenol-based cross-linking agents, bisaminothiophenol-based cross-linking agents, bisdiaminophenyl-based cross-linking agents, and the like have conventionally been used in crosslinking systems that use a cyano group as a crosslinking point, but these agents also react with a carboxyl group and an alkoxycarbonyl group to form an oxazole ring, a thiazole ring, and an imidazole ring to provide a crosslinked product.

Further, examples of the cross-linking agent include a cross-linking agent represented by formula (46): $X^{41}$-$(CH_2)_n$-$R^{50}$-$(CH_2)_m$-$X^{41}$, wherein each $X^{41}$ is independently an alkyne group, a nitrile group, or $Y^{41}{}_pN_3$, wherein $Y^{41}$ is SO, $SO_2$, $C_6H_4$, or CO, and p is 0 or 1, n and m are independently integers of 1 to 4, and $R^{50}$ is selected from the group consisting of

i) a fluoroalkylene group having 3 to 10 carbon atoms,
ii) a fluoralkoxylene group having 3 to 10 carbon atoms,
iii) a substituted arylene group,
iv) an oligomer including a copolymerization unit of vinylidene fluoride and perfluoro(methylvinylether),
v) an oligomer including a copolymerization unit of vinylidene fluoride and hexafluoropropylene,
vi) an oligomer including a copolymerization unit of tetrafluoroethylene and perfluoro(methylvinylether), and
vii) an oligomer including a copolymerization unit of tetrafluoroethylene and a hydrocarbon olefin. This cross-linking agent is preferably used together with a fluorine-containing elastomer having a nitrile group, an azide group, a sulfonyl azide group, a carbonyl azide group, or an alkyne group. For example, the nitrile group of the fluorine-containing elastomer reacts with the azide group of the cross-linking agent to form a tetrazole ring to provide a crosslinked product.

Examples of a particularly preferred cross-linking agent include a compound having a plurality of 3-amino-4-hydroxyphenyl groups or 3-amino-4-mercaptophenyl groups, or a compound represented by formula (47):

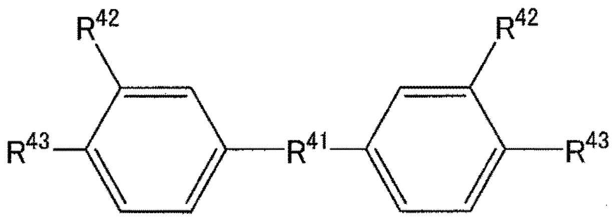

wherein $R^{41}$, $R^{42}$, and $R^{43}$ are as defined above. Specifically, examples include 2,2-bis(3-amino-4-hydroxyphenyl) hexafluoropropane (generic name: bis(aminophenol)AF), 2,2-bis(3-amino-4-mercaptophenyl) hexafluoropropane, tetraaminobenzene, bis-3,4-diaminophenylmethane, bis-3,4-diaminophenyl ether, 2,2-bis(3,4-diaminophenyl) hexafluoropropane, 2,2-bis[3-amino-4-(N-phenylamino)phenyl]hexafluoropropane, 2,2-bis[3-amino-4-(N-methylamino)phenyl] hexafluoropropane, 2,2-bis[3-amino-4-(N-ethylamino)phenyl]hexafluoropropane, 2,2-bis[3-amino-4-(N-propylamino) phenyl]hexafluoropropane, 2,2-bis[3-amino-4-(N-perfluorophenylamino)phenyl]hexafluoropropane, 2,2-bis[3-amino-4-(N-benzylamino)phenyl]hexafluoropropane, and the like.

Among these, from the viewpoints of heat resistance, steam resistance, amine resistance, and good crosslinkability, the cross-linking agent is preferably 2,2-bis[3-amino-4-(N-phenylamino)phenyl]hexafluoropropane.

The content of at least one selected from the group consisting of an inorganic nitride, an organotin compound, an ammonia-generating compound, and a cross-linking agent is preferably 0.05 to 10 parts by mass, more preferably 0.5 to 5 parts by mass, based on 100 parts by mass of the fluorine-containing elastomer.

The composition can be prepared by mixing each of the above-described components by using an ordinary

polymer processing machine, for example, an open roll, a Banbury mixer, a kneader, or the like. In addition, the fluorine-containing elastomer composition can also be prepared by a method using a closed mixer. The composition can be suitably used as a molding material for obtaining a crosslinked product by crosslinking and molding.

Further, the composition may be prepared by co-coagulating the fluoropolymer (P) and the fluorine-containing elastomer in an aqueous medium to prepare a composition containing the fluoropolymer (P) and the fluorine-containing elastomer, and then optionally adding other components to the composition.

A crosslinked product of the present disclosure is obtained from the above-mentioned composition. The crosslinked product of the present disclosure is excellent in plasma resistance and has a small compression set even after use under severe conditions. The crosslinked product of the present disclosure is preferably a crosslinked product obtained by crosslinking the composition, because the plasma resistance and the compression set characteristics are more excellent.

Examples of the method for obtaining a crosslinked product from the composition include a method in which a preform is obtained using the composition as a molding material, and then the preform is crosslinked. The method for obtaining the preform by using the composition as a molding material may be an ordinary method, and is performed by a known method such as a method of heating and compressing in a mold, a method of press-fitting into a heated mold, and a method of extruding with an extruder. In the case of an extruded product such as a hose and an electric wire, the crosslinked product can be obtained by heating and crosslinking with steam or the like after extrusion.

The above-described crosslinking can be performed in the order of primary crosslinking and secondary crosslinking. The primary crosslinking is preferably carried out at 150 to 200°C for 5 to 120 minutes, and more preferably at 170 to 190°C for 5 to 60 minutes. As the crosslinking means, known crosslinking means may be used, and examples thereof include press-crosslinking.

The secondary crosslinking is preferably carried out at 180 to 320°C for 2 to 24 hours, and more preferably at 200 to 310°C for 5 to 20 hours. Further, the temperature may be changed within this temperature range. As the crosslinking means, known crosslinking means may be used, and examples thereof include oven crosslinking.

The crosslinked product of the present disclosure can be suitably used as a sealing material for a semiconductor fabrication apparatus that particularly requires heat resistance, and particularly a semiconductor fabrication apparatus in which high-density plasma irradiation is performed. Examples of the sealing material include O-rings, square-rings, gasket, packing, oil seals, bearing seals, lip seals, and the like.

In addition, the molded article of the present disclosure can also be used as various polymer products used in semiconductor fabrication apparatus, such as diaphragms, tubes, hoses, various rubber rolls, and belts. Further, the molded article of the present disclosure can also be used as a coating material and a lining material.

As referred to herein, the "semiconductor fabrication apparatus" is not limited to an apparatus for fabricating semiconductors, and widely includes general fabrication apparatus used in the semiconductor field requiring a high level of cleanliness, such as apparatus for manufacturing liquid crystal panels and plasma panels. Examples thereof include the following.

(1) Etching apparatus

Dry etching apparatus
Plasma etching apparatus
Reactive ion etching apparatus
Reactive ion beam etching apparatus
Sputter etching apparatus
Ion beam etching apparatus
Wet etching apparatus
Ashing apparatus

(2) Cleaning apparatus dry etching cleaning apparatus

$UV/O_3$ cleaning apparatus
Ion beam cleaning apparatus
Laser beam cleaning apparatus
Plasma cleaning apparatus
Gas etching cleaning apparatus

Extraction and cleaning apparatus
Soxhlet extraction cleaning apparatus
High-temperature high-pressure extraction cleaning apparatus
Microwave extraction cleaning apparatus
Supercritical extraction cleaning apparatus

(3) Exposure apparatus

Stepper
Coater/developer

(4) Polishing apparatus

CMP apparatus

(5) Film formation apparatus

CVD apparatus
Sputtering apparatus

(6) Diffusion/ion implantation apparatus

Oxidation diffusion apparatus
Ion implantation apparatus

The crosslinked product of the present disclosure exhibits excellent performance as a sealing material for, for example, a CVD apparatus, a plasma etching apparatus, a reactive ion etching apparatus, an ashing apparatus, and an excimer laser exposure machine.

EXAMPLES

Next, embodiments of the present disclosure will be described with reference to examples, but the present disclosure is not limited to only these examples.

The numerical values in the examples were measured by the following methods.

<Solid concentration>

In an air dryer, 1 g of an aqueous dispersion was dried at 150°C for 60 minutes, and the ratio of the mass of the non-volatile matter to the mass of the aqueous dispersion (1 g) was expressed in percentage and taken as the solid concentration thereof.

<Average primary particle size>

The average primary particle size was determined by calculating the correlation between the transmittance of a predetermined cell injected with a fluoropolymer aqueous dispersion adjusted to 0.15% by mass solids with 550 nm light and the number average primary particle size calculated by measuring the Feret diameter by a transmission electron micrograph, and then applying the measured transmittance of the obtained sample to the above correlation (calibration curve method).

<Infrared absorption spectral analysis>

Infrared absorption spectral analysis was performed using a Fourier transform infrared spectrometer to obtain an

infrared absorption spectrum of the fluoropolymer powder obtained by coagulation and drying. The ratio of the height of each peak appearing in the obtained absorption spectrum was calculated by the following method.

$$\text{Spectral intensity ratio 1} = h_1/h_0$$

$$\text{Spectral intensity ratio 2} = h_2/h_0$$

$h_0$: peak height of overtone of C-F (2360 to 2370 $cm^{-1}$)
$h_1$: peak height of branched chain stretching vibration (1030 to 1040 $cm^{-1}$)
$h_2$: peak height of stretching of C=C (1780 to 1800 $cm^{-1}$)

<Content of perfluoroalkadiene unit>

The content of the perfluoroalkadiene unit was measured by $^{19}$F-NMR analysis.

<Peak temperature>

The peak temperature was measured using TG/DTA (simultaneous thermogravimetric - differential thermal analyzer) by precisely weighing about 10 mg of a fluoropolymer powder, which had no history of being heated to a temperature of 300°C or higher, and storing it in a dedicated aluminum pan. The aluminum pan was heated up in the temperature range from 25°C to 600°C at 10°C/min under an atmospheric atmosphere to obtain a differential thermal (DTA) curve, and the peak temperature was defined as the temperature corresponding to the maximum value in the obtained differential thermal (DTA) curve.

<Deformation rate>

In a cylindrical mold with a diameter of 13 mm, 1.7 g of PTFE powder was packed at room temperature. Next, the powder was gradually pressurized and held at 29.4 MPa for 5 minutes, and then taken out from the mold to obtain a preform. The preform was placed in an air circulation furnace at 40°C, heated to 370°C at a temperature-increasing rate of 25°C/hour, sintered at 370°C for 90 minutes, cooled to 40°C at a cooling rate of 25°C/hour, taken out of the furnace, and slowly cooled to room temperature. From the obtained formed article, a cylindrical compression test piece 13.0 mm in diameter and 5.85 mm in height was cut out.

The obtained test piece and the compression jig were preheated at 200°C. The test piece was compressed at 200°C to a compressibility of 30% (test piece having a height of 5.85 mm was compressed to a height of 4.095 mm). After compression at 200°C for 24 hours, the test piece was taken out from the compression jig, and the taken out test piece was allowed to stand at 23°C for 30 minutes, and the height ($t_1$) of the test piece was measured. The deformation rate was determined by the following formula. A small deformation rate means that the creep resistance is excellent.

$$\text{Deformation rate (\%)} = (t_0 - t_1)/t_0 \times 100$$

$t_0$: height (mm) of test piece before test
$t_1$: height (mm) of test piece after compression test

In the above test, $t_0$ = 5.85 mm.

<Melt viscosity>

The melt viscosity was measured in conformity with ASTM D1238, using a flow tester (manufactured by Shimadzu Corporation) and a 2φ-8L die and keeping 2 g of the sample that has been heated in advance at 380°C for 5 minutes, at the above temperature under a load of 0.7 MPa. All of the fluoropolymers obtained in Synthesis Examples 1 to 4 did not melt, and therefore the melt viscosity could not be measured.

<Standard specific gravity (SSG)>

The SSG was measured by the water replacement method in conformity with ASTM D792 using a sample molded in conformity with ASTM D4895-89.

Synthesis Example 1 (Production of fluoropolymer)

To a glass reactor equipped with a stirrer having an internal capacity of 0.3 L, 150 g of deionized water, 6 g of paraffin wax, and 0.225 g of 2,3,3,3-tetrafluoro-2-[1,1,2,3,3,3-hexafluoro-2-(trifluoromethoxy)propoxy]-ammonium propanoate dispersant ($CF_3OCF(CF_3)CF_2OCF(CF_3)COONH_4$) (PMPA) were added. The contents of the reactor were then heated to 70°C and the reactor was deoxidized. Perfluorooctadiene ($CF_2=CF(CF_2)_4CF=CF_2$) in the amounts listed in Table 1 was added, and then 0.015 g of ammonium persulfate (APS) initiator dissolved in 2 g of deionized water was injected into the reactor, bringing the reactor to a pressure of 0.835 MPaG. A drop in pressure occurred after injection of the initiator, indicating the initiation of polymerization. The TFE was added to the reactor to maintain the pressure, and the polymerization was continued until about 40 g of the TFE was consumed in the reaction. Then, the reactor was evacuated to normal pressure, and the contents were taken out from the reactor and cooled. The supernatant paraffin wax was removed from the fluoropolymer aqueous dispersion. The solid concentration of the obtained aqueous dispersion and the average primary particle size of the primary particles in the aqueous dispersion are shown in Table 1.

The resulting aqueous dispersion was diluted to a solid concentration of about 15% by mass with deionized water, and 2.5 g of nitric acid was added to 100 g of the resulting fluoropolymer aqueous dispersion to coagulate the mixture by stirring. The resulting wet powder was filtered off and washed with fresh 3000 g of deionized water. After repeating this washing operation three times, the fluoropolymer powder was obtained by drying in a heat circulation dryer at 150°C for 18 hours. The results are shown in Table 1.

Synthesis Examples 2 to 4 (Production of fluoropolymer)

Fluoropolymer aqueous dispersions and fluoropolymer powders were obtained in the same manner as in Synthesis Example 1, except that the amount of perfluorooctadiene added was changed as shown in Table 1. The results are shown in Table 1.

Synthesis Example 5 (Production of fluoropolymer)

To a glass reactor equipped with a stirrer having an internal capacity of 0.3 L, 150 g of deionized water, 6 g of paraffin wax, and 0.225 g of 2,3,3,3-tetrafluoro-2-[1,1,2,3,3,3-hexafluoro-2-(trifluoromethoxy)propoxy]-ammonium propanoate dispersant ($CF_3OCF(CF_3)CF_2OCF(CF_3)COONH_4$) (PMPA) were added. The contents of the reactor were then heated to 70°C the reactor was deoxidized. Then, 4 mg of propane gas and 0.16 g of perfluorooctadiene ($CF_2=CF(CF_2)_4CF=CF_2$) was added, and then 0.015 g of ammonium persulfate (APS) initiator dissolved in 2 g of deionized water was injected into the reactor, bringing the reactor to a pressure of 0.835 MPaG. A drop in pressure occurred after injection of the initiator, indicating the initiation of polymerization. The TFE was added to the reactor to maintain the pressure, and the polymerization was continued until about 40 g of the TFE was consumed in the reaction. Then, the reactor was evacuated to normal pressure, and the contents were taken out from the reactor and cooled. The supernatant paraffin wax was removed from the fluoropolymer aqueous dispersion.

The resulting aqueous dispersion was diluted to a solid concentration of about 20% by mass with deionized water, and 2.5 g of nitric acid was added to 100 g of the resulting fluoropolymer aqueous dispersion to coagulate the mixture by stirring. The resulting wet powder was filtered off and washed with fresh 3000 g of deionized water. After repeating this washing operation three times, the fluoropolymer powder was obtained by drying in a heat circulation dryer at 150°C for 18 hours. The results are shown in Table 3.

Synthesis Example 6 (Production of fluoropolymer)

A fluoropolymer aqueous dispersion and a fluoropolymer powder were obtained in the same manner as in Synthesis Example 5, except that 4 mg of propane gas in Synthesis Example 5 was changed to 2 mg. The results are shown in Table 3.

Comparative Synthesis Example 1 (Production of fluoropolymer)

A fluoropolymer aqueous dispersion and a fluoropolymer powder were obtained in the same manner as in Synthesis Example 1, except that perfluorooctadiene was not added. The results are shown in Table 1.

Comparative Synthesis Example 2

A fluoropolymer aqueous dispersion and a fluoropolymer powder were obtained in the same manner as in Synthesis Example 1, except that perfluoro[3-(1-methyl-2-vinyloxy-ethoxy)propionitrile] (hereinafter abbreviated as

CNVE) was used instead of perfluorooctadiene, and the drying was performed in a vacuum drying furnace at 70°C for 24 hours. The results are shown in Table 1.

Comparative Synthesis Example 3

A fluoropolymer aqueous dispersion and a fluoropolymer powder were obtained in the same manner as in Synthesis Example 5, except that perfluorooctadiene was not added. The results are shown in Table 3.

[Table 1]

Table 1

| | | Synthesis Example 1 | Synthesis Example 2 | Synthesis Example 3 | Synthesis Example 4 | Comparative Synthesis Example 1 | Comparative Synthesis Example 2 |
|---|---|---|---|---|---|---|---|
| Polymerization conditions | | | | | | | |
| Amount of perfluorooctadiene added | (g) | 0.08 | 0.16 | 0.80 | 1.40 | - | - |
| Amount of CNVE added | (g) | - | - | - | - | - | 0.16 |
| Aqueous dispersion | | | | | | | |
| Solid concentration | (% by mass) | 21.2 | 22.0 | 21.7 | 21.3 | 21.7 | 21.7 |
| Average primary particle size | (μm) | 0.24 | 0.23 | 0.21 | 0.22 | 0.26 | 0.25 |
| Physical properties | | | | | | | |
| Spectral intensity ratio 1 ($h_1/h_0$) | | 0.006 | 0.037 | 0.356 | 0.627 | 0 | - |
| Spectral intensity ratio 2 ($h_2/h_0$) | | 0.175 | 0.177 | 0.187 | 0.192 | 0.179 | 0.171 |
| Content of perfluorooctadiene unit | (mol%) | 0.01 | 0.02 | 0.28 | 0.50 | 0 | - |
| Peak temperature | (°C) | 341.5 | 340.1 | 342.4 | 342.3 | 336.0 | 342.3 |
| SSG | | 2.178 | 2.178 | 2.176 | 2.175 | 2.182 | 2.178 |
| Deformation rate | (%) | 18.1 | 13.8 | 11.5 | 11.8 | 21.7 | 12.0 |

Next, examples in which the fluoropokymer produced above was used as a filler will be described. The numerical values in the examples were measured by the following methods.

<Composition feature of fluorine-containing elastomer>

The compositional feature of the fluorine-containing elastomer was measured by $^{19}$F-NMR and IR analyses.

<Mooney viscosity>

The Mooney viscosity was measured at 170°C according to JIS K6300 by using a Mooney viscometer MV2000E manufactured by ALPHA TECHNOLOGIES.

<Crosslinking characteristics>

Using RPA2000 manufactured by ALPHA TECHNOLOGIES, the crosslink curves of the resulting compositions

were determined at 180°C, 30 minutes, 1 Hz, and 10% strain to determine the minimum torque (ML) and maximum torque (MH).

<Compression set>

The compression set was measured according to the method described in ASTM D395 or JIS K 6262. The O-rings produced in Examples and Comparative Examples were compressed by a compressibility of 25% at normal temperature, using a compression device (the O-rings with a thickness (cross-sectional diameter) of 3.5 mm were compressed to a thickness of 2.625 mm).

Next, the compression device to which the compressed O-ring was fixed was placed statically in an electric furnace and left at 200°C for 70 hours, after which the compression device was taken out of the electric furnace. Thereafter, the compression device to which the compressed O-ring was fixed was placed statically in another electric furnace and left at 70°C for 24 hours. The O-ring was removed from the compression device, the removed O-ring was placed statically in a thermostatic chamber and left at 23°C for 30 minutes, and the thickness of the O-ring ($t_2$) was measured. The compression set was determined by the equation below. A small compression set means that the recoverability is excellent at low temperatures after use at high temperatures, and that excellent performance is exhibited in conditions close to the O-ring use environment.

$$\text{compression set (\%)} = (t_0 - t_2)/(t_0 - t_1) \times 100$$

$t_0$: original thickness of O-ring (mm)
$t_1$: thickness of spacer (mm)
$t_2$: thickness of O-ring after compression test (mm)

In the above test, $t_0$ was 3.5 mm and $t_1$ was 2.625 mm.

<Rate of decrease in weight by ICP plasma>

The O-ring (P24 size) produced in each of Examples and Comparative Examples was placed statically in a process chamber. Plasma generated by using a radical generator was fed into the process chamber, and the O-ring was exposed under the following plasma irradiation conditions. The rate of decrease in weight by ICP plasma of $O_2$ and $CF_4$ were calculated from the masses of the O-ring before and after the plasma irradiation.

(Plasma irradiation conditions)

Radical generator: ICP high-density plasma device (RIE-101iPH manufactured by SAMCO)
Gas flow rate: 16 sccm
Power: 400 W
Pressure: 2.66 Pa
Irradiation time: 1 hour

<Rate of decrease in weight by $NF_3$ remote plasma>

The O-ring (P24 size) produced in each of Examples and Comparative Examples was placed statically in a process chamber. Plasma generated by using a fluorine-radical generator was fed into the process chamber, and the O-ring was exposed under the following plasma irradiation conditions. The rate of decrease in weight by $NF_3$ remote plasma were calculated from the masses of the O-ring before and after the plasma irradiation.

(Plasma irradiation conditions)

Fluorine-radical generator: Astron Atomic Fluorine Generator Model AX7657-2 (manufactured by MKS)

$$\text{Gas flow rate: Ar/NF}_3 = 1\ \text{(L/min)}/1\ \text{(L/min)}$$

Pressures: 3 Torr

Irradiation temperature: 250°C
Irradiation time: 12 hours (the position of the O-ring in the chamber is moved every two hours)

(Mass measurement)

The masses of the O-ring before and after the plasma irradiation were measured using an electronic analytical balance BP211D (manufactured by Sartorius). Then, the rate of decrease in weight by $NF_3$ remote plasma was calculated by the following equation.

$$dW = (W_0 - W_1)/W_0 \times 100$$

dW: rate of decrease in weight by $NF_3$ remote plasma
$W_0$: mass of O-ring before plasma irradiation
$W_1$: mass of O-ring after plasma irradiation

Example 1

A composition was prepared by kneading with 100 parts by mass of a fluorine-containing elastomer (TFE/PMVE/$CF_2$=$CFOCF_2CF(CF_3)OCF_2CF_2CN$ = 59.3/39.9/0.8 (mol%), Mooney Viscosity (ML (1 + 20) (170°C)) = 66), 20 parts by mass of the fluoropolymer obtained in Synthesis Example 1, and 0.9 part by mass of 2,2-bis[3-amino-4-(N-phenylamino) phenyl]hexafluoropropane as a cross-linking agent with an open roll. The results are shown in Table 2.

The obtained composition was crosslinked by pressing at 180°C for 30 minutes, and further subjected to oven crosslinking in an oven at 290°C for 18 hours to produce an O-ring having a P24 size. Using the obtained O-ring, the compression set, the rate of decrease in weight by ICP plasma, and the rate of decrease in weight by remote plasma were measured by the above-described methods. The results are shown in Table 2.

Examples 2 to 4

A composition and O-ring were obtained in the same manner as in Example 1 except that the fluoropolymer described in Table 2 was used instead of the fluoropolymer obtained in Synthesis Example 1. The results are shown in Table 2.

Comparative Example 1

A composition and O-ring were obtained in the same manner as in Example 1 except that the fluoropolymer described in Table 2 was used instead of the fluoropolymer obtained in Synthesis Example 1. The results are shown in Table 2.

Comparative Example 2

A composition was obtained in the same manner as in Example 1 except that the fluoropolymer described in Table 2 was used instead of the fluoropolymer obtained in Synthesis Example 1. The resulting composition exhibited MH and ML as described in Table 2. A gradual loss of plasticity was observed during the preparation of the composition. The resulting composition was difficult to form, and production of an O-ring, measurement of compression set and rate of decrease in weight by ICP plasma, and measurement of decrease in weight by remote plasma could not be performed.

[Table 2]

Table 2

| | | Example 1 | Example 2 | Example 3 | Example 4 | Comparative Example 1 | Comparative Example 2 |
|---|---|---|---|---|---|---|---|
| Type of fluoropolymer | | Synthesis Example 1 | Synthesis Example 2 | Synthesis Example 3 | Synthesis Example 4 | Comparative Synthesis Example 1 | Comparative Synthesis Example 2 |
| MH | (kPa) | 973 | 1009 | 1027 | 1003 | 972 | 785 |
| ML | (kPa) | 216 | 246 | 228 | 216 | 218 | 265 |
| Compression set | (%) | 49 | 51 | 46 | 44 | 53 | unmeasurable |
| Rate of decrease in weight by $O_2$ plasma | (%) (%) | 5.6 | 5.5 | 5.3 | 5.6 | 5.5 | unmeasurable |
| Rate of decrease in weight by $CF_4$ plasma | (%) | 1.9 | 1.9 | 1.9 | 2.0 | 1.8 | unmeasurable |
| Rate of decrease in weight by remote plasma | (%) | 0.19 | 0.16 | 0.13 | 0.20 | 0.13 | unmeasurable |

Examples 5 to 6

A composition and O-ring were obtained in the same manner as in Example 1 except that the fluoropolymer described in Table 3 was used instead of the fluoropolymer obtained in Synthesis Example 1. The results are shown in Table 3.

Comparative Example 3

A composition and O-ring were obtained in the same manner as in Example 1 except that the fluoropolymer described in Table 3 was used instead of the fluoropolymer obtained in Synthesis Example 1. The results are shown in Table 3.

[Table 3]

Table 3

| | | Example 5 | Example 6 | Comparative Example 3 |
|---|---|---|---|---|
| Type and physical properties of fluoropolymer | | | | |
| Type of fluoropolymer | | Synthesis Example 5 | Synthesis Example 6 | Comparative Synthesis Example 3 |
| Average primary particle size | (μm) | 0.20 | 0.20 | 0.21 |
| Spectral intensity ratio 1 ($h_1/h_0$) | | 0.042 | 0.040 | 0.000 |
| Spectral intensity ratio 2 ($h_2/h_0$) | | 0.177 | 0.178 | 0.179 |
| Content of perfluorooctadiene unit | (mol%) | 0.05 | 0.05 | 0 |
| Peak temperature | (°C) | 328.3 | 328.9 | 329.5 |
| Melt viscosity | (poise) | $37x10^4$ | $148x10^4$ | $27x10^4$ |
| Physical properties of crosslinked product | | | | |
| Compression set | (%) | 46 | 44 | 50 |
| Rate of decrease in weight by remote plasma | (%) | 0.02 | 0.09 | 0.11 |

## Claims

1. A fluoropolymer comprising tetrafluoroethylene units (1) and monomer units (2) derived from a perfluoroalkadiene of the formula $CF_2=CF(CF_2)_nCF=CF_2$ (2) where n is an integer of 2-10, wherein the content of tetrafluoroethylene units (1) is 98.0-99.999 mol% and that of the monomer units (2) is 0.001-2.0 mol%, each based on total monomer units constituting the fluoropolymer.

2. The fluoropolymer of claim 1, wherein the spectral intensity ratio ($h_1/h_0$) of a peak height ($h_1$) appearing at 1030-1040 $cm^{-1}$ to a peak height ($h_0$) appearing at 2360-2370 $cm^{-1}$, obtained by infrared absorption spectral analysis of the fluoropolymer, is $\geq 0.001$.

3. The fluoropolymer of claim 1 or 2, wherein the spectral intensity ratio ($h_2/h_0$) of a peak height ($h_2$) appearing at 1780-1800 $cm^{-1}$ to a peak height ($h_0$) appearing at 2360-2370 $cm^{-1}$, obtained by infrared absorption spectral analysis of the fluoropolymer, is $\leq 0.20$.

4. The fluoropolymer of any of claims 1-3, wherein the peak temperature determined by the method mentioned in the specification is ≥ 300°C.

5. The fluoropolymer of any of claims 1-4, wherein the melt viscosity measured at 380°C by the method mentioned in the specification is 100 - 700.000 Pa.s ( $1.0 \times 10^3$ to $7.0 \times 10^6$ poise).

6. The fluoropolymer of any of claims 1-5, wherein the fluoropolymer is a powder.

7. An aqueous dispersion comprising the fluoropolymer of any of claims 1-6.

8. A composition comprising the fluoropolymer (P) of any of claims 1-6 and a polymer (E) different from the fluoropolymer (P).

9. The composition of claim 8, wherein the polymer (E) is a perfluoroelastomer.

10. The composition of claim 8 or 9, wherein the content of the fluoropolymer (P) is 0.5-100 parts by mass based on 100 parts by mass of the polymer (E).

11. The composition of any of claims 8-10, further comprising at least one selected from an inorganic nitride, an organotin

compound, an ammonia-generating compound, and a cross-linking agent.

**12.** A crosslinked product obtained from the composition of claim 11.

**Patentansprüche**

**1.** Fluorpolymer, umfassend Tetrafluorethylen-Einheiten (1) und Monomer-Einheiten (2), die von einem

Perfluoralkadien der Formel $CF_2=CF(CF_2)_nCF=CF_2$ (2) abgeleitet sind, wobei n eine ganze Zahl von 2 bis 10 ist, wobei der Gehalt an Tetrafluorethylen-Einheiten (1) 98,0-99,999 Mol-% und der Gehalt an Monomereinheiten (2) 0,001-2,0 Mol-% beträgt, jeweils bezogen auf die Gesamtmenge der Monomereinheiten, aus denen das Fluorpolymer besteht.

**2.** Fluorpolymer gemäß Anspruch 1, wobei das Spektralintensitätsverhältnis ($h_1/h_0$) einer bei 1030-1040 $cm^{-1}$ auftretenden Peakhöhe ($h_1$) zu einer bei 2360-2370 $cm^{-1}$ auftretenden Peakhöhe ($h_0$), das durch Infrarotabsorptionsspektralanalyse des Fluorpolymers erhalten wird, $\geq$ 0,001 ist.

**3.** Fluorpolymer gemäß Anspruch 1 oder 2, wobei das Spektralintensitätsverhältnis ($h_2/h_0$) einer bei 1780-1800 $cm^{-1}$ auftretenden Peakhöhe ($h_2$) zu einer bei 2360-2370 $cm^{-1}$ auftretenden Peakhöhe ($h_0$), das durch Infrarotabsorptionsspektralanalyse des Fluorpolymers erhalten wird, $\leq$ 0,20 ist.

**4.** Fluorpolymer gemäß mindestens einem der Ansprüche 1 bis 3, wobei die durch das in der Beschreibung erwähnte Verfahren bestimmte Spitzentemperatur (peak temperature) $\geq$ 300 °C beträgt.

**5.** Fluorpolymer gemäß mindestens einem der Ansprüche 1 bis 4, wobei die bei 380 °C gemessene durch das in der Beschreibung erwähnte Verfahren bestimmte Schmelzviskosität 100-700,000 Pa·s ($1{,}0 \times 10^3$ bis $7{,}0 \times 10^6$ Poise) beträgt.

**6.** Fluorpolymer gemäß mindestens einem der Ansprüche 1 bis 5, wobei das Fluorpolymer ein Pulver ist.

**7.** Wässrige Dispersion, die das Fluorpolymer gemäß mindestens einem der Ansprüche 1 bis 6 umfasst.

**8.** Zusammensetzung, die das Fluorpolymer (P) gemäß mindestens einem der Ansprüche 1 bis 6 und ein vom Fluorpolymer (P) verschiedenes Polymer (E) umfasst.

**9.** Zusammensetzung gemäß Anspruch 8, wobei das Polymer (E) ein Perfluorelastomer ist.

**10.** Zusammensetzung gemäß Anspruch 8 oder 9, wobei der Gehalt an Fluorpolymer (P) 0,5 bis 100 Masseteile, bezogen auf 100 Masseteile des Polymers (E), beträgt.

**11.** Zusammensetzung gemäß mindestens einem der Ansprüche 8 bis 10, ferner umfassend mindestens eines ausgewählt aus einem anorganischen Nitrid, einer Organozinnverbindung, einer ammoniakbildenden Verbindung und einem Vernetzungsmittel.

**12.** Vernetztes Produkt, das aus der Zusammensetzung gemäß Anspruch 11 erhalten wird.

**Revendications**

**1.** Un fluoropolymère comprenant des unités de tétrafluoroéthylène (1) et des unités monomères (2)

dérivées d'un perfluoroalcadiène de formule $CF_2=CF(CF_2)_nCF=CF_2$ (2) où n est un nombre entier compris entre 2 et 10,
dans lequel la teneur en motifs tétrafluoroéthylène (1) est 98,0-99,999 % en moles et celle en motifs monomères (2) est 0,001-2,0 % en moles, chacune étant basée sur le total des motifs monomères constituant le fluoropolymère.

2. Le fluoropolymère selon la revendication 1, dans lequel le rapport d'intensité spectrale ($h_1/h_0$) entre une hauteur de pic ($h_1$) apparaissant à 1030-1040 $cm^{-1}$ et une hauteur de pic ($h_0$) apparaissant à 2360-2370 $cm^{-1}$, obtenu par analyse spectrale d'absorption infrarouge du fluoropolymère, est ≥ 0,001.

3. Le fluoropolymère selon la revendication 1 ou 2, dans lequel le rapport d'intensité spectrale ($h_2/h_0$) entre une hauteur de pic ($h_2$) apparaissant à 1780-1800 $cm^{-1}$ et une hauteur de pic ($h_0$) apparaissant à 2360-2370 $cm^{-1}$, obtenu par analyse spectrale d'absorption infrarouge du fluoropolymère, est ≤ 0,20.

4. Le fluoropolymère selon l'une quelconque des revendications 1 à 3, dans lequel la température de pic déterminée par la méthode mentionnée dans la description est ≥ 300 °C.

5. Le fluoropolymère selon l'une quelconque des revendications 1 à 4, dans lequel la viscosité à l'état fondu mesurée à 380 °C par la méthode mentionnée dans la description est 100-700000 Pa·s ($1,0 \times 10^3$ à $7,0 \times 10^6$ poises).

6. Le fluoropolymère de l'une quelconque des revendications 1 à 5, dans lequel le fluoropolymère est une poudre.

7. Une dispersion aqueuse comprenant le fluoropolymère de l'une quelconque des revendications 1 à 6.

8. Une composition comprenant le fluoropolymère (P) de l'une quelconque des revendications 1 à 6 et un polymère (E) différent du fluoropolymère (P).

9. La composition selon la revendication 8, dans laquelle le polymère (E) est un perfluoroélastomère.

10. La composition selon la revendication 8 ou 9, dans laquelle la teneur en fluoropolymère (P) est de 0,5 à 100 parties en masse pour 100 parties en masse du polymère (E).

11. La composition selon l'une quelconque des revendications 8 à 10, comprenant en outre au moins un élément choisi parmi un nitrure inorganique, un composé organostannique, un composé générateur d'ammoniac et un agent de réticulation.

12. Produit réticulé obtenu à partir de la composition selon la revendication 11.

Figure 1

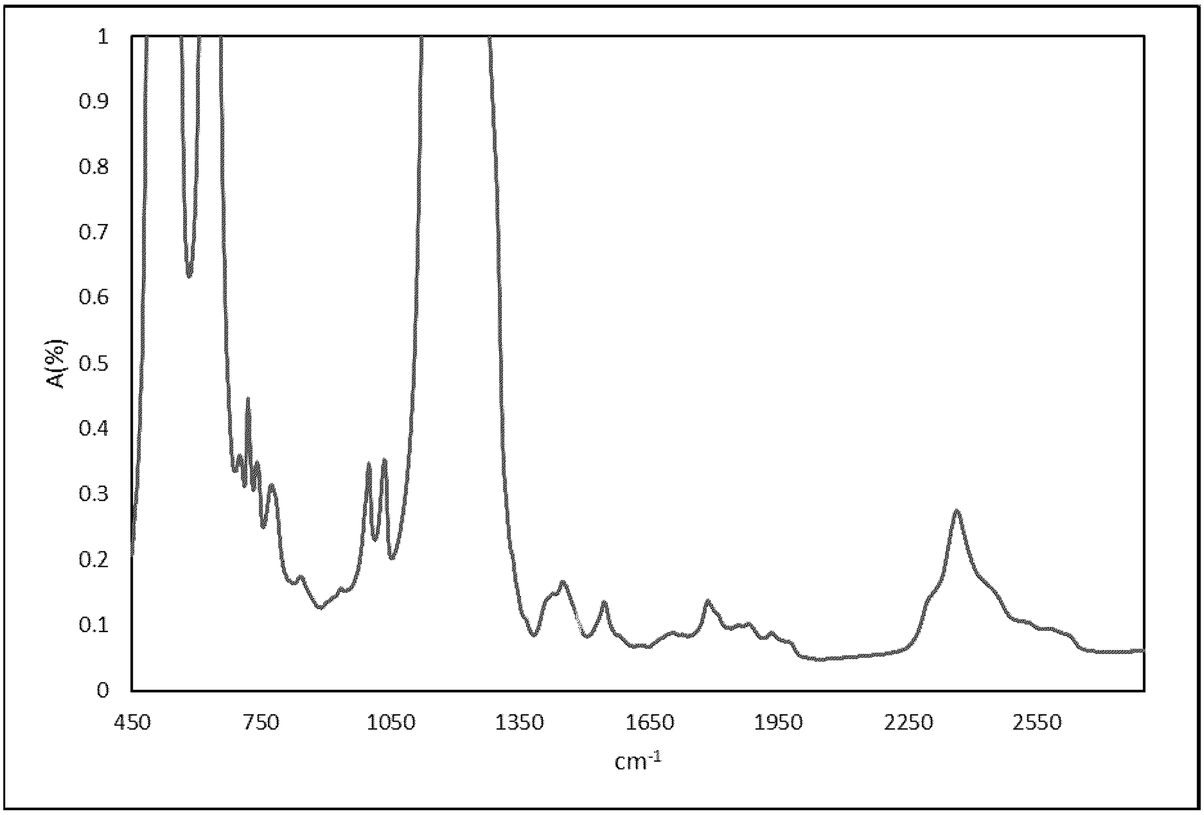

1
0.9
0.8
0.7
0.6
0.5
0.4
0.3
0.2
0.1
0
A(%)
450
750
1050
1350
1650
1950
2250
2550
cm-1

Figure 2

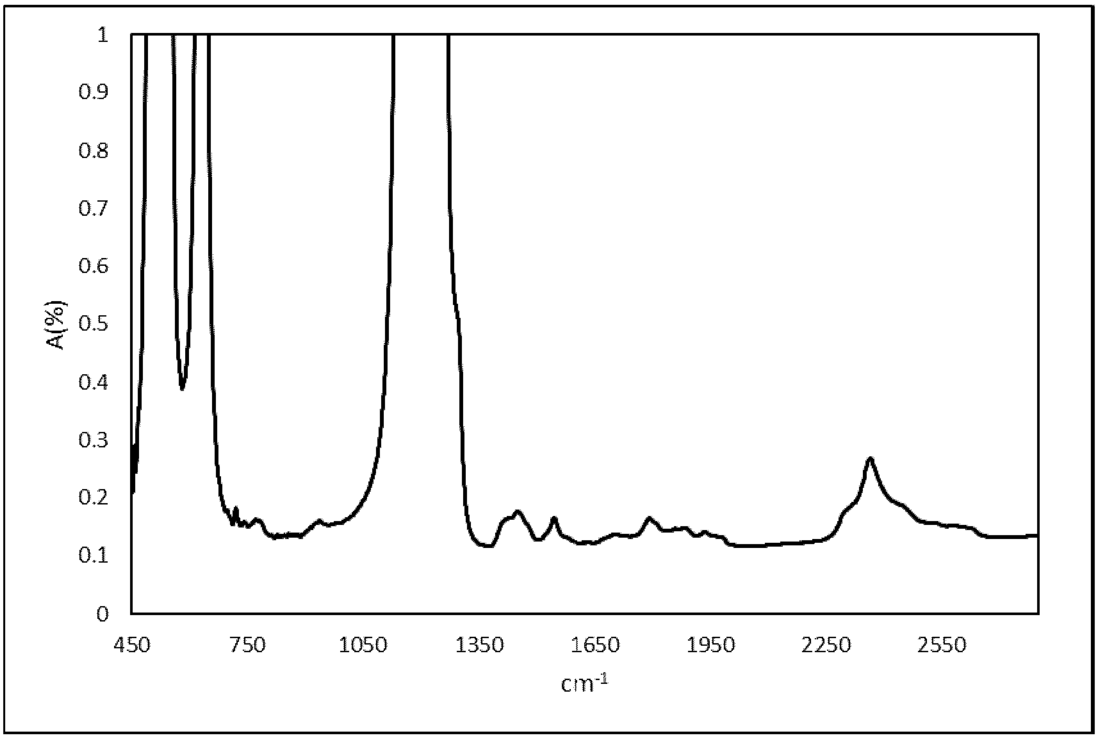
1
0.9
0.8
0.7
0.6
0.5
0.4
0.3
0.2
0.1
0
A(%)
450
750
1050
1350
1650
1950
2250
2550
cm-1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2007052664 A
- JP 5230151 A
- JP 2001151086 A
- WO 9708239 A
- EP 0302513 A
- JP 10147617 A
- WO 9724381 A
- JP 61057324 A
- JP 4081608 A
- JP 5013961 A
- JP 9111081 A
- WO 0009603 A
- WO 9823675 A
- JP 2059177 A
- JP 8120146 A